# EUROPÄISCHE PATENTANMELDUNG

(11) **EP 4 083 257 A1**
(43) Veröffentlichungstag der Anmeldung: **02.11.2022**
(21) Anmeldenummer: 21170625.4
(22) Anmeldetag: 27.04.2021
(51) Int. Cl.: C25B 1/04, C25B 1/23, C25B 1/46, C25B 3/26, C25B 15/08, C02F 1/20, B01D 19/00

(54) **VERFAHREN ZUM ENTGASEN VON AUS EINEM ELEKTROLYSEUR ABGELEITETEN FLÜSSIGKEITSSTRÖMEN**

(71) Anmelder: Siemens Energy Global GmbH & Co. KG, 81739 München (DE)
(72) Erfinder: Hanebuth, Marc, 90482 Nürnberg (DE); Vlahovic, Vladimir, 91077 Neunkirchen A. Br. (DE)

(57) **Zusammenfassung**

Die vorliegende Erfindung betrifft ein Verfahren zum Entgasen mindestens eines ersten und/oder zweiten Flüssigkeitsstroms enthaltend ein erstes Gas, der aus einem Elektrolyseur abgeleitet wird und/oder der durch Behandlung mindestens eines aus einem Elektrolyseur abgeleiteten ersten Gasstroms umfassend ein erstes Fluid und das erste Gas gebildet wird, sowie eine Vorrichtung zum Entgasen mindestens eines ersten und/oder zweiten Flüssigkeitsstroms enthaltend ein erstes Gas, der aus einem Elektrolyseur abgeleitet wird und/oder der durch Behandlung mindestens eines aus einem Elektrolyseur abgeleiteten ersten Gasstroms umfassend ein erstes Fluid und das erste Gas gebildet wird.

## Beschreibung

Die vorliegende Erfindung betrifft ein Verfahren zum Entgasen mindestens eines ersten und/oder zweiten Flüssigkeitsstroms enthaltend ein erstes Gas, der aus einem Elektrolyseur abgeleitet wird und/oder der durch Behandlung mindestens eines aus einem Elektrolyseur abgeleiteten ersten Gasstroms umfassend ein erstes Fluid und das erste Gas gebildet wird, sowie eine Vorrichtung zum Entgasen mindestens eines ersten und/oder zweiten Flüssigkeitsstroms enthaltend ein erstes Gas, der aus einem Elektrolyseur abgeleitet wird und/oder der durch Behandlung mindestens eines aus einem Elektrolyseur abgeleiteten ersten Gasstroms umfassend ein erstes Fluid und das erste Gas gebildet wird.

In vielen Bereichen der Herstellung chemischer Ausgangsprodukte gewinnen Elektrolyseure durch das Vorhandensein von Überschussenergie, insbesondere aus erneuerbaren Energien, zunehmend an Bedeutung. Elektrolyseure eignen sich insbesondere für elektrochemische Umwandlungen unter Einsatz von Überschussenergie. Sie eröffnen beispielsweise eine Route für eine CO₂-neutrale Bereitstellung von Energieträgern und Treibstoffen und auch chemischen Ausgangssubstanzen. Unter Berücksichtigung des Klimawandels können Elektrolyseure daher eine Schlüsseltechnologie darstellen.

Grundsätzlich existieren verschiedene Arten von Elektrolyseuren, wobei Elektrolyseure mit wässrigen Medien und Betriebstemperaturen unterhalb von 100 °C am weitesten verbreitet und technologisch am weitesten fortgeschritten sind. Die Produkte, die mit diesen Elektrolyseuren erzeugt werden, sind häufig gasförmig. Beispiele hierfür sind Wasserstoff, Kohlenstoffmonoxid und Chlor.

Bei solchen Elektrolysesystemen fallen oftmals wässrige Volumenströme an, die verworfen oder in den Prozess zurückgeführt werden können. Es handelt sich hierbei zum Beispiel um sogenannte Purge-Ströme, die nötig sind, um einer Aufkonzentrierung von Verunreinigungen im Elektrolyseur entgegenzuwirken. Es treten daneben auch beispielsweise Kondensate oder andere Wasserströme bei einer Kompression bzw. Trocknung der Produktgase auf, die entgast werden müssen.

Technisch bedingt enthalten diese herausgeführten Flüssigkeiten gelöste Gase. Die gelösten Gase können wieder entweichen, nachdem die Flüssigkeit aus dem Elektrolysesystem geführt wurde. Über einen längeren Betriebszeitraum können sich hierbei, obwohl die absoluten Massenströme der Gase typischerweise sehr klein sind, über die Zeit zündfähige oder explosionsfähige, im Falle von Kohlenmonoxid und Chlor auch toxische Gasgemische bilden, falls die Entgasung in geschlossene oder unzureichend belüftete Räume stattfindet.

Für den sicheren Betrieb von Elektrolysesystemen ist im Vorfeld ein aufwändiges Engineering nötig. Dieses ist nicht zuletzt wegen der gelösten Gase sehr zeit- und kostenintensiv. Es sind häufig Maßnahmen wie Zwangsbelüftungen, Inertisierungen, Entgasungen oder ähnliches nötig, wobei die entsprechende Funktion dann durch eine relativ kostenintensive sicherheitsgerichtete Sensorik überwacht werden muss. Diese zusätzlichen Aufwände setzen die Wirtschaftlichkeit des gesamten Prozesses herab.

Da die Entsorgung des freigesetzten Gases ein ähnlich gelagertes Sicherheitsproblem darstellen kann, ist es zudem oft wünschenswert das freigesetzte Gas in das Elektrolysesystem zurückführen zu können. Dies kann das Engineering vereinfachen (z. B. sind keine Ausbreitungsrechnungen nötig), und zusätzliche Maßnahmen, wie Überwachungen oder Nachbehandlungen, können vermieden werden. Dies ermöglicht einen insgesamt weniger komplexen und wirtschaftlicheren Prozess.

Es gibt im Stand der Technik verschiedene generelle Möglichkeiten, Abwässer zu entgasen, wobei diese jedoch bisher bei der Elektrolyse nicht unbedingt Anwendung finden.

Beispielsweise kann eine Vakuumentgasung erfolgen, bei der mit Hilfe einer Vakuumpumpe der Gesamtdruck erniedrigt werden kann, was bei einer mit Gas gesättigten Lösung zu der Bildung von Gasblasen führt. Diese können dann abgetrennt werden. Nachteile dieser Variante sind, dass der Energiebedarf sehr groß werden kann, ein signifikanter apparativer Aufwand vorliegt und die potentielle Gefahr besteht, dass durch Undichtigkeiten der Anlage Umgebungsluft in das System gelangen kann. Dies führt zu einer Verminderung der Produktgasqualität und im Extremfall zu explosiven Gasgemischen.

Ein weiteres Beispiel ist die thermische Entgasung. Hierbei wird ausgenutzt, dass Gaslöslichkeiten im Allgemeinen temperaturabhängig sind. Die Löslichkeit sinkt typischerweise mit steigender Temperatur, so dass aus einer gesättigten Lösung Gas ausgetrieben werden kann, indem die Temperatur erhöht wird. Hierbei ist nachteilig, dass nur ein relativ kleiner Teil des Gases ausgetrieben werden kann. Im Falle von Wasserstoff ist die Temperaturabhängigkeit sogar besonders gering und kehrt sich sogar im relevanten Temperaturbereich um, so dass die Gaslöslichkeit ausnahmsweise mit steigender Temperatur entgegen der Regel ansteigt. Für die Entgasung von Wasserstoff ist eine thermische Entgasung somit generell nicht sinnvoll.

Ein weiteres Verfahren, die Membranentgasung, basiert auf einem Abtrennen von Gasen aus einer flüssigen Phase durch eine weitere Gasphase, wobei hier die Gasphase über eine durchlässige Membran mit der flüssigen Phase in Kontakt steht.

Bei bestimmten Elektrolyseverfahren ist auch eine direkte Entfernung von Abgasen möglich, wie beispielsweise in der RU 2744333 C1 beschrieben.

Eine Anwendung auf Elektrolyseverfahren ist jedoch nicht einfach und bedarf oft komplizierter apparativer Aufbauten.

Für die Handhabung der abgetrennten Gase gibt es daneben für die Elektrolyse mehrere Ansätze aus dem Stand der Technik.

Ein erster Ansatz ist das Ableiten in die Atmosphäre. Da es sich bei den freigesetzten Gasen häufig um brennbare oder potentiell explosive Gase handelt, sind häufig hohe Lanzen für ein sicheres Ableiten nötig. Es müssen Ausbreitungsrechnungen für die Auslegung durchgeführt werden. Da es sich in aller Regel um feuchte Gase handelt, müssen weiterhin für den Winter Begleitheizungen oder andere Maßnahmen vorgesehen werden, um ein Einfrieren der Ableitungen auszuschließen. Da bei dem An- oder Abfahren Luft in die Ableitung gelangen und somit ein zündfähiges Gasgemisch entstehen kann, können weitere apparative Maßnahmen, wie Rückschlagsicherungen, Rückzündschutz oder die Bereitstellung eines Inertgases nötig sein. Manche Stoffe, wie zum Beispiel Chlor, dürfen grundsätzlich nicht an die Atmosphäre abgegeben werden. An manchen Standorten, wie zum Beispiel Raffinerien, können besonders restriktive Regeln gelten, die ein Abblasen von beispielsweise Wasserstoff verbieten.

Bei einer thermischen oder katalytischen Verbrennung wird das abgetrennte Gas oxidativ in unbedenkliche Stoffe umgewandelt. Dies geschieht entweder, indem das Gas in eine Flamme geleitet wird (Thermische Nachverbrennung: TNV) oder zusammen mit Luftsauerstoff über ein beheiztes Katalysatorbett (Katalytische Nachverbrennung: KNV) geführt wird. Im Falle von Wasserstroff bildet sich beispielsweise Wasser, Kohlenmonoxid wird in CO₂ umgewandelt. Beide Varianten bedeuten einen signifikanten apparativen Aufwand, wobei bei der TNV zusätzlich kontinuierlich ein Brenngas verbraucht wird. Ein weiterer Nachteil dieser Variante ist, dass sie nur für manche Stoffe eingesetzt werden kann - anfallendes Chlor aus einer Chloralkali-Elektrolyse kann beispielsweise nicht oxidativ in eine unschädliche Substanz umgewandelt werden.

Eine Rückführung in den Elektrolyseprozess hat den offensichtlichen Vorteil, dass das abgetrennte Gas genutzt wird, was zu einer, meist geringfügig, höheren Ausbeute der Elektrolyse führt. Häufig lässt sich diese Variante nicht umsetzen, da das abgetrennte Gas nicht die nötige Reinheit hat. Oft rechnet sich eine Rückführung auch nicht, da der apparative Aufwand den Effizienzgewinn nicht rechtfertigt. Es wäre beispielsweise in vielen Fällen ein Kompressor für das abgetrennte Gas nötig, um es in den Elektrolyseprozess zurückführen zu können.

Es ist somit eine Aufgabe der vorliegenden Erfindung, eine möglichst einfache und auf viele Anwendungsfälle anwendbare Lösung zu entwickeln, die eine Entgasung eines Flüssigkeitsstroms enthaltend mindestens ein Gas aus einem Elektrolyseur oder als Folge der Elektrolyse, beispielsweise von Kondensat und/oder Purge-Strömen aus einem Elektrolyseur, ermöglicht, so dass die entgasten Flüssigkeitsströme gefahrlos verworfen oder zurückgeführt werden können.

Die Erfinder haben gefunden, dass durch Dampfstrippen eine effektive Behandlung von Flüssigkeitsströmen aus Elektrolyseuren oder von Flüssigkeitsströmen, die durch Behandlung von Gasströmen aus Elektrolyseuren erhalten werden, ermöglicht wird.

In einem ersten Aspekt betrifft die vorliegende Erfindung ein Verfahren zum Entgasen mindestens eines ersten und/oder zweiten Flüssigkeitsstroms enthaltend ein erstes Gas, der aus einem Elektrolyseur abgeleitet wird und/oder der durch Behandlung mindestens eines aus einem Elektrolyseur abgeleiteten ersten Gasstroms umfassend ein erstes Fluid und das erste Gas gebildet wird, umfassend:
- Bereitstellen eines Elektrolyseurs,
- Umsetzen mindestens eines Edukts in dem Elektrolyseur zu mindestens einem gasförmigen Produkt umfassend das erste Gas,
- Bilden des mindestens einen ersten Flüssigkeitsstroms enthaltend das erste Gas durch Einbringen des ersten Gases in eine erste Flüssigkeit im Elektrolyseur, und/oder Bilden des mindestens einen ersten Gasstroms umfassend das erste Fluid und das erste Gas durch Einbringen des ersten Fluids im Elektrolyseur in das gasförmige Produkt umfassend das erste Gas, wobei das erste Fluid von der ersten Flüssigkeit gleich oder verschieden sein kann,
- Ableiten des mindestens einen ersten Flüssigkeitsstroms enthaltend das erste Gas aus dem Elektrolyseur, und/oder Ableiten des mindestens einen ersten Gasstroms umfassend das erste Fluid und das erste Gas aus dem Elektrolyseur, und Behandeln des mindestens einen ersten Gasstroms umfassend das erste Fluid und das erste Gas, wodurch der mindestens eine zweite Flüssigkeitsstrom enthaltend das erste Gas entsteht, und
- Entgasen des mindestens einen ersten und/oder zweiten Flüssigkeitsstroms enthaltend das erste Gas, wobei das Entgasen derart erfolgt, dass der mindestens eine erste und/oder zweite Flüssigkeitsstrom enthaltend das erste Gas mittels Dampfstrippen in einem Dampfstripper entgast wird, wobei das erste Gas zumindest teilweise aus dem mindestens einen ersten und/oder zweiten Flüssigkeitsstrom abgetrennt wird.

Zudem offenbart ist eine Vorrichtung zum Entgasen mindestens eines ersten und/oder zweiten Flüssigkeitsstroms enthaltend ein erstes Gas, der aus einem Elektrolyseur abgeleitet wird und/oder der durch Behandlung mindestens eines aus einem Elektrolyseur abgeleiteten ersten Gasstroms umfassend ein erstes Fluid und das erste Gas gebildet wird, umfassend:
- einen Elektrolyseur, der dazu ausgebildet ist, mindestens ein Edukt in dem Elektrolyseur zu mindestens einem gasförmigen Produkt umfassend das erste Gas umzusetzen,
   wobei der Elektrolyseur zudem derart ausgestaltet ist, dass durch Einbringen des ersten Gases in eine erste Flüssigkeit im Elektrolyseur einen ersten Flüssigkeitsstrom enthaltend das erste Gas gebildet werden kann, und/oder dass durch Einbringen des ersten Fluids im Elektrolyseur in das gasförmige Produkt umfassend das erste Gas ein erster Gasstrom umfassend das erste Fluid und das erste Gas gebildet werden kann;
- eine erste Ableitung zum Ableiten des mindestens einen ersten Flüssigkeitsstroms enthaltend das erste Gas aus dem Elektrolyseur, die dazu ausgebildet ist, den mindestens einen ersten Flüssigkeitsstrom enthaltend das erste Gas aus dem Elektrolyseur abzuleiten; und/oder
   - eine erste Gasableitung zum Ableiten des mindestens einen ersten Gasstroms umfassend das erste Fluid und das erste Gas aus dem Elektrolyseur, die dazu ausgebildet ist, den mindestens einen ersten Gasstrom umfassend das erste Fluid und das erste Gas aus dem Elektrolyseur abzuleiten,
   - eine Behandlungseinrichtung zum Behandeln des mindestens einen ersten Gasstromes umfassend das erste Fluid und das erste Gas, die dazu ausgebildet ist, den mindestens einen ersten Gasstrom umfassend das erste Fluid und das erste Gas derart zu behandeln, dass mindestens ein zweiter Gasstrom enthaltend das erste Gas und der mindestens eine zweite Flüssigkeitsstrom enthaltend das erste Gas entstehen, wobei die erste Gasableitung zudem dazu ausgebildet ist, den mindestens einen ersten Gasstrom umfassend das erste Fluid und das erste Gas der Behandlungseinrichtung zuzuführen, und
   - eine zweite Ableitung zum Ableiten des mindestens einen zweiten Flüssigkeitsstroms enthaltend das erste Gas, welche dazu ausgebildet ist, den mindestens einen zweiten Flüssigkeitsstrom enthaltend das erste Gas aus der Behandlungseinrichtung abzuleiten;
   weiter umfassend
- mindestens einen Dampfstripper, der dazu ausgebildet ist, das erste Gas mittels Dampfstrippen aus dem mindestens einen ersten und/oder zweiten Flüssigkeitsstrom enthaltend das erste Gas zumindest teilweise abzutrennen, wobei dem Dampfstripper der erste Flüssigkeitsstrom enthaltend das erste Gas über die erste Ableitung und/oder der zweite Flüssigkeitsstrom enthaltend das erste Gas über die zweite Ableitung zugeführt werden.

Weitere Aspekte der vorliegenden Erfindung sind den abhängigen Ansprüchen und der detaillierten Beschreibung zu entnehmen.

Die beiliegenden Zeichnungen sollen Ausführungsformen der vorliegenden Erfindung veranschaulichen und ein weiteres Verständnis dieser vermitteln. Im Zusammenhang mit der Beschreibung dienen sie der Erklärung von Konzepten und Prinzipien der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander dargestellt. Gleiche, funktionsgleiche und gleich wirkende Elemente, Merkmale und Komponenten sind in den Figuren der Zeichnungen, sofern nichts anderes ausgeführt ist, jeweils mit denselben Bezugszeichen versehen.

Figuren 1 bis 4 zeigen schematisch verschiedene Verfahren gemäß der vorliegenden Erfindung.

Den Figuren 5 und 6 sind schematisch beispielhafte Ausgestaltungen von Dampfstrippern zu entnehmen.

In Figuren 7 bis 11 sind schematisch beispielhafte erfindungsgemäße Vorrichtungen dargestellt.

So nicht anderweitig definiert haben hierin verwendete technische und wissenschaftliche Ausdrücke dieselbe Bedeutung, wie sie von einem Fachmann auf dem Fachgebiet der Erfindung gemeinhin verstanden wird.

Mengenangaben im Rahmen der vorliegenden Erfindung beziehen sich auf Gew.%, soweit nicht anderweitig angegeben oder aus dem Kontext ersichtlich ist.

Der Normaldruck ist 101325 Pa = 1,01325 bar.

Ein erster Aspekt der vorliegenden Erfindung betrifft ein Verfahren zum Entgasen mindestens eines ersten und/oder zweiten Flüssigkeitsstroms enthaltend ein erstes Gas, der aus einem Elektrolyseur abgeleitet wird und/oder der durch Behandlung mindestens eines aus einem Elektrolyseur abgeleiteten ersten Gasstroms umfassend ein erstes Fluid und das erste Gas gebildet wird, umfassend:
- Bereitstellen eines Elektrolyseurs,
- Umsetzen mindestens eines Edukts in dem Elektrolyseur zu mindestens einem gasförmigen Produkt umfassend das erste Gas,
- Bilden des mindestens einen ersten Flüssigkeitsstroms enthaltend das erste Gas durch Einbringen des ersten Gases in eine erste Flüssigkeit im Elektrolyseur, und/oder Bilden des mindestens einen ersten Gasstroms umfassend das erste Fluid und das erste Gas durch Einbringen des ersten Fluids im Elektrolyseur in das gasförmige Produkt umfassend das erste Gas, wobei das erste Fluid von der ersten Flüssigkeit gleich oder verschieden sein kann,
- Ableiten des mindestens einen ersten Flüssigkeitsstroms enthaltend das erste Gas aus dem Elektrolyseur, und/oder Ableiten des mindestens einen ersten Gasstroms umfassend das erste Fluid und das erste Gas aus dem Elektrolyseur, und Behandeln des mindestens einen ersten Gasstroms umfassend das erste Fluid und das erste Gas, wodurch der mindestens eine zweite Flüssigkeitsstrom enthaltend das erste Gas entsteht, und
- Entgasen des mindestens einen ersten und/oder zweiten Flüssigkeitsstroms enthaltend das erste Gas, wobei das Entgasen derart erfolgt, dass der mindestens eine erste und/oder zweite Flüssigkeitsstrom enthaltend das erste Gas mittels Dampfstrippen in einem Dampfstripper entgast wird, wobei das erste Gas zumindest teilweise aus dem mindestens einen ersten und/oder zweiten Flüssigkeitsstrom abgetrennt wird.

Im erfindungsgemäßen Verfahren, wie auch in den nachstehend genannten, umfassten Varianten, finden die Schritte in dieser Reihenfolge statt, wobei einzelne Schritte auch parallel oder zeitversetzt stattfinden können bei der dritten Variante oder entsprechenden Ausführungsformen im erfindungsgemäßen Verfahren.

Im erfindungsgemäßen Verfahren sind zumindest drei Varianten umfasst.

In einer ersten Variante betrifft die Erfindung ein Verfahren zum Entgasen mindestens eines ersten Flüssigkeitsstroms enthaltend ein erstes Gas, der aus einem Elektrolyseur abgeleitet wird umfassend:
- Bereitstellen eines Elektrolyseurs,
- Umsetzen mindestens eines Edukts in dem Elektrolyseur zu mindestens einem gasförmigen Produkt umfassend das erste Gas,
- Bilden des mindestens einen ersten Flüssigkeitsstroms enthaltend das erste Gas durch Einbringen des ersten Gases in eine erste Flüssigkeit im Elektrolyseur,
- Ableiten des mindestens einen ersten Flüssigkeitsstroms enthaltend das erste Gas aus dem Elektrolyseur, und
- Entgasen des mindestens einen ersten Flüssigkeitsstroms enthaltend das erste Gas, wobei das Entgasen derart erfolgt, dass der mindestens eine erste Flüssigkeitsstrom enthaltend das erste Gas mittels Dampfstrippen in einem Dampfstripper entgast wird, wobei das erste Gas zumindest teilweise aus dem mindestens einen ersten Flüssigkeitsstrom abgetrennt wird.

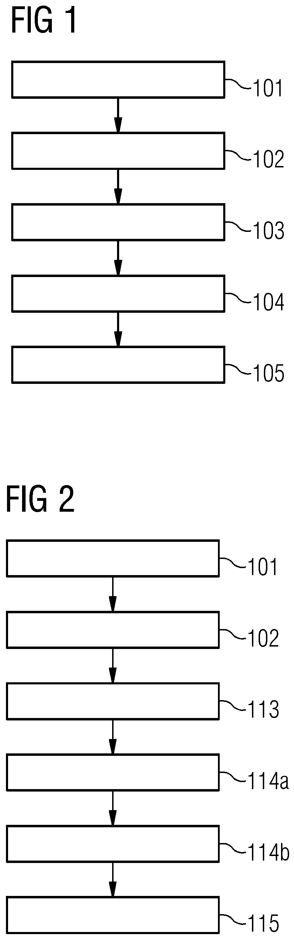

Diese erste Variante ist schematisch in Figur 1 gezeigt. Auf ein Bereitstellen eines Elektrolyseurs 101 folgt ein Umsetzen mindestens eines Edukts in dem Elektrolyseur zu mindestens einem gasförmigen Produkt umfassend das erste Gas 102, darauf das Bilden des mindestens einen ersten Flüssigkeitsstroms enthaltend das erste Gas durch Einbringen des ersten Gases in eine erste Flüssigkeit im Elektrolyseur 103, gefolgt vom Ableiten des mindestens einen ersten Flüssigkeitsstroms enthaltend das erste Gas aus dem Elektrolyseur 104, und dem Entgasen des mindestens einen ersten Flüssigkeitsstroms enthaltend das erste Gas mittels Dampfstrippen 105.

In einer zweiten Variante betrifft die Erfindung ein Verfahren zum Entgasen mindestens eines zweiten Flüssigkeitsstroms enthaltend ein erstes Gas, der durch Behandlung mindestens eines aus einem Elektrolyseur abgeleiteten ersten Gasstroms umfassend ein erstes Fluid und das erste Gas gebildet wird, umfassend:
- Bereitstellen eines Elektrolyseurs,
- Umsetzen mindestens eines Edukts in dem Elektrolyseur zu mindestens einem gasförmigen Produkt umfassend das erste Gas,
- Bilden des mindestens einen ersten Gasstroms umfassend das erste Fluid und das erste Gas durch Einbringen des ersten Fluids im Elektrolyseur in das gasförmige Produkt umfassend das erste Gas,
- Ableiten des mindestens einen ersten Gasstroms umfassend das erste Fluid und das erste Gas aus dem Elektrolyseur, und Behandeln des mindestens einen ersten Gasstroms umfassend das erste Fluid und das erste Gas, wodurch der mindestens eine zweite Flüssigkeitsstrom enthaltend das erste Gas entsteht, und
- Entgasen des mindestens einen zweiten Flüssigkeitsstroms enthaltend das erste Gas, wobei das Entgasen derart erfolgt, dass der mindestens eine zweite Flüssigkeitsstrom enthaltend das erste Gas mittels Dampfstrippen in einem Dampfstripper entgast wird, wobei das erste Gas zumindest teilweise aus dem mindestens einen zweiten Flüssigkeitsstrom abgetrennt wird.

Die zweite Variante ist schematisch in Figur 2 gezeigt. Auf ein Bereitstellen eines Elektrolyseurs 101 folgt ein Umsetzen mindestens eines Edukts in dem Elektrolyseur zu mindestens einem gasförmigen Produkt umfassend das erste Gas 102, darauf das Bilden des mindestens einen ersten Gasstroms umfassend das erste Fluid und das erste Gas durch Einbringen des ersten Fluids im Elektrolyseur in das gasförmige Produkt umfassend das erste Gas 113, gefolgt vom Ableiten des mindestens einen ersten Gasstroms umfassend das erste Fluid und das erste Gas aus dem Elektrolyseur 114a und dem Behandeln des mindestens einen ersten Gasstroms umfassend das erste Fluid und das erste Gas 114b, wodurch der mindestens eine zweite Flüssigkeitsstrom enthaltend das erste Gas entsteht, sowie dem Entgasen des mindestens einen zweiten Flüssigkeitsstroms enthaltend das erste Gas mittels Dampfstrippen 115.

Eine dritte Variante betrifft ein Verfahren zum Entgasen mindestens eines ersten Flüssigkeitsstroms, der aus einem Elektrolyseur abgeleitet wird, und mindestens eines zweiten Flüssigkeitsstroms enthaltend ein erstes Gas, der durch Behandlung mindestens eines aus einem Elektrolyseur abgeleiteten ersten Gasstroms umfassend ein erstes Fluid und das erste Gas gebildet wird, umfassend:
- Bereitstellen eines Elektrolyseurs,
- Umsetzen mindestens eines Edukts in dem Elektrolyseur zu mindestens einem gasförmigen Produkt umfassend das erste Gas,
- Bilden des mindestens einen ersten Flüssigkeitsstroms enthaltend das erste Gas durch Einbringen des ersten Gases in eine erste Flüssigkeit im Elektrolyseur, und Bilden des mindestens einen ersten Gasstroms umfassend das erste Fluid und das erste Gas durch Einbringen des ersten Fluids im Elektrolyseur in das gasförmige Produkt umfassend das erste Gas, wobei das erste Fluid von der ersten Flüssigkeit gleich oder verschieden sein kann,
- Ableiten des mindestens einen ersten Flüssigkeitsstroms enthaltend das erste Gas aus dem Elektrolyseur, und Ableiten des mindestens einen ersten Gasstroms umfassend das erste Fluid und das erste Gas aus dem Elektrolyseur, und Behandeln des mindestens einen ersten Gasstroms umfassend das erste Fluid und das erste Gas, wodurch der mindestens eine zweite Flüssigkeitsstrom enthaltend das erste Gas entsteht, und
- Entgasen des mindestens einen ersten Flüssigkeitsstroms und des mindestens einen zweiten Flüssigkeitsstroms enthaltend das erste Gas, wobei das Entgasen derart erfolgt, dass der mindestens eine erste und der mindestens eine zweite Flüssigkeitsstrom enthaltend das erste Gas mittels Dampfstrippen in einem Dampfstripper entgast wird, wobei das erste Gas zumindest teilweise aus dem mindestens einen ersten und dem mindestens einen zweiten Flüssigkeitsstrom abgetrennt wird. In dieser dritten Variante können das Entgasen des mindestens einen ersten Flüssigkeitsstroms und des mindestens einen zweiten Flüssigkeitsstroms enthaltend das erste Gas im gleichen Dampfstripper oder in unterschiedlichen Dampfstrippern, beispielsweise einem ersten und einem zweiten Dampfstripper, erfolgen.

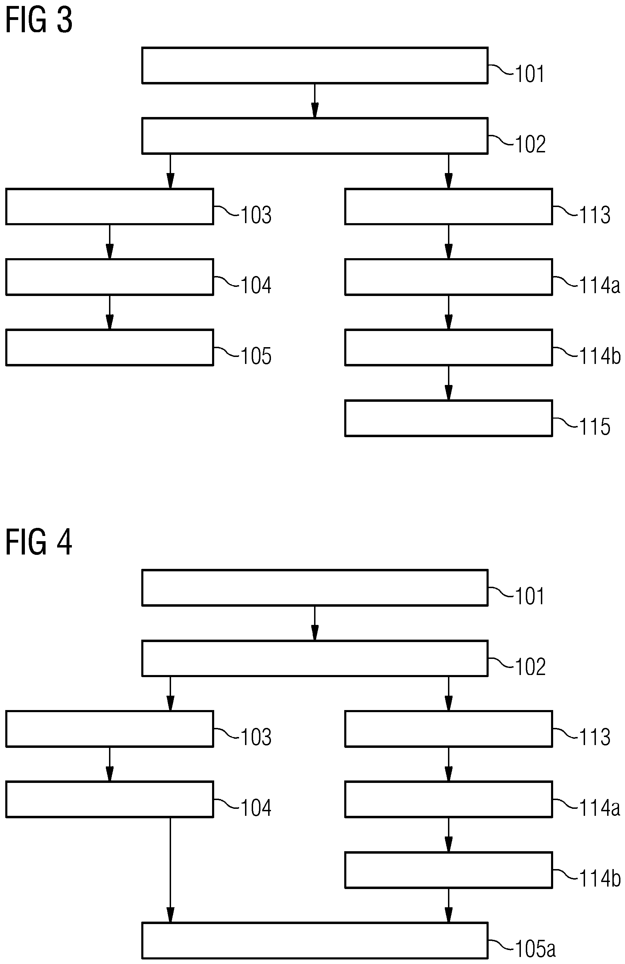

Die beiden Ausführungsformen der dritten Variante mit Entgasen in unterschiedlichen Dampfstrippern und in einem gemeinsamen Dampfstripper sind in Figuren 3 und 4 schematisch dargestellt.

In Figur 3 ist dabei die Variante mit zwei unterschiedlichen Dampfstrippern zu sehen, wobei hier die Verfahrensschritte denen aus Figuren 1 und 2 entsprechen, wobei auch deutlich wird, dass der erste Flüssigkeitsstrom und der erste Gasstrom beide im Elektrolyseur - jedoch üblicherweise an unterschiedlichen Orten, wie oben beschrieben - entstehen, dann jedoch getrennt abgeleitet werden und der erste Gasstrom behandelt wird. In Figur 4 sind die Schritte großteils identisch zu denen der Figur 3, wobei jedoch nach dem Ableiten des mindestens einen ersten Flüssigkeitsstroms enthaltend das erste Gas aus dem Elektrolyseur 104 und dem parallelen Behandeln des mindestens einen ersten Gasstroms umfassend das erste Fluid und das erste Gas 114b der erste und der zweite Flüssigkeitsstrom in einen gemeinsamen Dampfstripper geleitet werden, wo dann ein Entgasen des mindestens einen ersten und des mindestens einen zweiten Flüssigkeitsstroms enthaltend das erste Gas mittels Dampfstrippen 105a erfolgt.

Im erfindungsgemäßen Verfahren ist das Bereitstellen des Elektrolyseurs nicht besonders beschränkt. Der Elektrolyseur ist selbst nicht besonders beschränkt, sofern es möglich ist, darin ein Edukt zu mindestens einem gasförmigen Produkt umfassend ein erstes Gas umzusetzen. Hierfür weist der Elektrolyseur üblicherweise eine Anode und eine Kathode auf, wobei zumindest an einer dieser beiden Elektroden eine Umsetzung eines Edukts zu einem gasförmigen Produkt vonstattengeht. Hierbei ist nicht ausgeschlossen, dass an beiden Elektroden, also der Anode und der Kathode, jeweils ein (gleiches oder unterschiedliches) Edukt zu einem gasförmigen Produkt umfassend mindestens ein Gas umgesetzt werden, die dann auch beide einem erfindungsgemäßen Verfahren unterzogen werden können.

Das Edukt, das zu einem gasförmigen Produkt umfassend ein Gas umgesetzt wird, ist nicht besonders beschränkt, auch nicht hinsichtlich des Aggregatszustands. Beispielsweise kann das Edukt in Lösung sein, wie beispielsweise bei einer Chlor-Alkali-Elektrolyse, bei der beispielsweise in einer wässrigen Lösung Natriumchlorid elektrolytisch zu zumindest Chlor als gasförmigem Produkt umgesetzt wird, welches dann in einem erfindungsgemäßen Verfahren aus der wässrigen Lösung nach Austritt aus dem Elektrolyseur entgast werden kann. Auch ist beispielsweise bei einer Wasserelektrolyse aus flüssigem Wasser die Herstellung von Wasserstoff und Sauerstoff an den entsprechenden Elektroden möglich, wobei hier dann das erfindungsgemäße Verfahren bevorzugt zum Entgasen von Wasserstoff, welches beispielsweise in einen Elektrolyten im Elektrolyseur übergehen kann, verwendet wird. Auch ist beispielsweise bei einer Umsetzung von CO₂ im Beisein wässriger Elektrolyten oder bei einer Anfeuchtung des CO₂ an einer Kathode die Bildung von CO, Wasserstoff, Formiat, Ethen, Methanol und/oder weiteren Kohlenwasserstoffen und davon abgeleiteten Verbindungen möglich, je nach eingesetztem Katalysator, wobei auch hier das entsprechende Gas in den Elektrolyten übergehen kann und mit einem erfindungsgemäßen Verfahren entgast werden kann. So ein Elektrolyt im Elektrolyseur hierbei nicht umgepumpt wird, kann auch zur Vermeidung der Aufkonzentration von Verunreinigungen im Elektrolyt, beispielsweise auch Produktgas, ein regelmäßiges Entfernen bzw. Austauschen des Elektrolyten erfolgen, beispielsweise mittels eines Purge-Stroms. Sowohl für umgepumpten Elektrolyt wie auch für einen Purge-Strom als beispielhaften ersten Flüssigkeitsstrom enthaltend ein erstes Gas - sei es Cl₂, H₂, CO, etc. - ist das erfindungsgemäße Verfahren anwendbar. Gestrippte Gase sind also beispielsweise H₂, CO, Cl₂ oder eine Mischung aus mehreren davon, beispielsweise bei einer CO₂-Elektrolyse.

Zudem kann auch ein Produktgas bzw. gasförmiges Produkt, welches ein erstes Gas, aber auch mehrere Gase (wie bei einer CO₂-Elektrolyse) umfassen kann, ein erstes Fluid enthalten, beispielsweise übergetretenes Lösungsmittel aus dem Elektrolyten, und/oder auch ein Gas zum Anfeuchten, wie beispielsweise Wasser bei der CO₂-Elektrolyse, und/oder auch nicht umgesetztes Edukt, wie Wasser bei einer Wasserelektrolyse. Diese "Restfeuchtigkeit" kann dann mit einem ersten Gasstrom, welches das erste Gas bzw. auch allgemein mindestens ein gasförmiges Umsetzungsprodukt aus der Elektrolyse umfasst, auch in Gasform und/oder in Form verteilter Flüssigkeitstropfen mit einem ersten Gasstrom aus dem Elektrolyseur abgeleitet werden, wo sie dann bei einer Nachbehandlung von diesem Gasstrom abgetrennt werden kann. Hierbei kann sich dann ein zweiter Flüssigkeitsstrom bilden, in dem das erste Gas enthalten ist.

Daneben sind auch die erste Flüssigkeit und das erste Fluid nicht besonders beschränkt. Beispielsweise kann die erste Flüssigkeit ein Elektrolyt, beispielsweise ein wässriger Elektrolyt, sein, beispielsweise Wasser als einziges Lösungsmittel enthalten oder sogar Wasser als einziges Lösungsmittel sein, und kann das erste Fluid ein Lösungsmittel und/oder ein Mittel zum Befeuchten, beispielsweise Wasser, enthalten oder sogar sein, im flüssigen und/oder gasförmigen Zustand. Im ersten Gasstrom kann also das erste Fluid in Gasform und/oder auch als Flüssigkeit, beispielsweise im Sinne eines Aerosols, vorhanden sein. Es ist aber auch nicht ausgeschlossen, dass die erste Flüssigkeit und/oder das erste Fluid von Wasser verschieden sind, beispielsweise mindestens ein organisches Lösungsmittel sind oder zumindest umfassen. So das erste Fluid als Flüssigkeit vorliegt, kann es auch der ersten Flüssigkeit entsprechen. Materiell können das erste Fluid und die erste Flüssigkeit gleich oder verschieden sein, also beispielsweise beide Wasser (im Falle des ersten Fluids möglicherweise in verschiedenen Aggregatszuständen) sein oder umfassen, oder auch andere Flüssigkeiten wie organische Lösungsmittel.

Gemäß bestimmten Ausführungsformen enthält der mindestens eine erste und/oder zweite Flüssigkeitsstrom enthaltend das erste Gas Wasser. Hierdurch ist eine einfache und effektive Entfernung des ersten Gases beim Dampfstrippen erzielbar. Entsprechend umfassen hier die erste Flüssigkeit und/oder das erste Fluid Wasser.

Wie aus dem obigen und nachfolgenden hervorgeht, können in einem Elektrolyseur auch mehrere Gasströme, welche ein Fluid und ein Gas enthalten, entstehen, beispielsweise sowohl an Anode und Kathode, und/oder können mehrere Elektrolyte in mehreren Elektrolyträumen vorgesehen sein, beispielsweise ein Anolyt und ein Katholyt, welche beide zu entgasen sind, sodass neben dem mindestens einen ersten und/oder zweiten Flüssigkeitsstrom enthaltend ein erstes Gas auch weitere Flüssigkeitsströme enthaltend ein - ggf. zweites oder weiteres - Gas anfallen können, welche ebenfalls einem erfindungsgemäßen Verfahren in einer erfindungsgemäßen Vorrichtung unterzogen werden. Obgleich die vorliegende Erfindung für mindestens einen ersten und/oder zweiten Flüssigkeitsstrom enthaltend ein erstes Gas beschrieben ist, ist entsprechend nicht ausgeschlossen, dass darüber hinaus auch weitere Flüssigkeitsströme enthaltend ein Gas entgast werden und/oder weitere Gasströme enthaltend ein weiteres, z.B. zweites, Fluid und - ggf. ein zweites oder weiteres - Gas behandelt werden und daraus entstehende Flüssigkeitsströme enthaltend ein - ggf. zweites oder weiteres - Gas entgast werden.

Je nach Edukt bzw. Edukten für Anode und/oder Kathode kann sich auch der Elektrolyseuraufbau unterscheiden, mit entsprechenden Zuleitungen für Edukt, sofern erforderlich, optional Membranen und/oder anderen Separatoren zwischen den Elektroden, Ableitungen für Elektrolyt als beispielsweise erste Ableitung und/oder Ableitungen als erste Gasableitung für den Produktgasstrom als ersten Gasstrom umfassend ein erstes Fluid und ein erstes Gas, zum Beispiel an einem Gasraum an oder um eine Elektrode, etc. Es ist nicht ausgeschlossen, dass mehrere Zu- und/oder Ableitungen vorgesehen sind, so beispielsweise eine Zuleitung für einen Kathodenraum, eine erste Zuleitung für einen Elektrolytraum, eine erste Ableitung aus dem Elektrolytraum, eine Zuleitung zu einem Anodenraum, eine erste Gasableitung und/oder eine weitere Gasableitung (oder auch andere Leitung bei Bilden eines Flüssigprodukts) aus dem Kathoden- und/oder Anodenraum, etc.

Der Elektrolyseur umfasst jedoch mindestens eine Kathode und eine Anode, um eine Umsetzung mindestens eines Edukts zu einem gasförmigen Produkt zu erzielen.

Weiterhin ist jedoch das Umsetzen mindestens eines Edukts in dem Elektrolyseur zu mindestens einem gasförmigen Produkt umfassend das erste Gas nicht besonders beschränkt, und es kann die Umsetzung bei normalem oder erhöhtem Druck, bei Raumtemperatur (20-25°C), erhöhter Temperatur, erniedrigter Temperatur, im Durchfluss, im Gegenfluss zu einem Elektrolyten, in einem Flow-Through oder in einem Flow-By an einer entsprechenden Elektrode als z.B. Gasdiffusionselektrode, etc., stattfinden.

Im Elektrolyseur wird daraufhin mindestens der erste Flüssigkeitsstrom enthaltend das erste Gas durch Einbringen des ersten Gases in eine erste Flüssigkeit und/oder der mindestens eine erste Gasstrom umfassend das erste Fluid und das erste Gas durch Einbringen des ersten Fluids im Elektrolyseur in das gasförmige Produkt umfassend das erste Gas gebildet, wobei das erste Fluid von der ersten Flüssigkeit gleich oder verschieden sein kann. Das Bilden der Flüssigkeitsströme ist nicht besonders beschränkt, sofern sie dann abgeleitet werden können. Die Strömung kann hierbei durch Pumpen, etc. geeignet eingestellt werden, z.B. für den ersten Flüssigkeitsstrom, durch ein Einblasen eines z.B. gasförmigen Edukts, etc.

Das Ableiten des mindestens einen ersten Flüssigkeitsstroms enthaltend das erste Gas aus dem Elektrolyseur, und/oder das Ableiten des mindestens einen ersten Gasstroms umfassend das erste Fluid und das erste Gas aus dem Elektrolyseur sind nicht besonders beschränkt und können auf geeignete Weise durchgeführt werden, insbesondere über eine erste Ableitung zum Ableiten des mindestens einen ersten Flüssigkeitsstroms enthaltend das erste Gas aus dem Elektrolyseur für den mindestens einen ersten Flüssigkeitsstrom enthaltend das erste Gas, und/oder über eine erste Gasableitung zum Ableiten des mindestens einen ersten Gasstroms umfassend das erste Fluid und das erste Gas für den ersten Gasstrom umfassend das erste Fluid und das erste Gas. Wenn in der zweiten oder dritten Variante ein Ableiten des mindestens einen ersten Gasstroms umfassend das erste Fluid und das erste Gas aus dem Elektrolyseur erfolgt, erfolgt auch ein Behandeln des mindestens einen ersten Gasstroms umfassend das erste Fluid und das erste Gas, wodurch der mindestens eine zweite Flüssigkeitsstrom enthaltend das erste Gas entsteht, da diese beiden Schritte in einem erfindungsgemäßen Verfahren miteinander verbunden werden. Bei einem Ableiten des ersten Flüssigkeitsstroms ist keine Behandlung erforderlich, da bereits ein Flüssigkeitsstrom enthaltend das erste Gas vorliegt. Für die Behandlung im Dampfstripper wird jedoch aus dem ersten Gasstrom umfassend das erste Fluid und das erste Gas erst ein Flüssigkeitsstrom hergestellt - nämlich der zweite Flüssigkeitsstrom enthaltend das erste Gas, indem der Gasstrom geeignet behandelt wird. Das Behandeln des mindestens einen ersten Gasstroms umfassend das erste Fluid und das erste Gas ist hierbei nicht besonders beschränkt, und es kann beispielsweise eine Kondensation in einem Kondensator als Behandlungseinrichtung - wenn beispielsweise das erste Fluid in einem Aerosol oder gasförmig abgeleitet wird, ein Abscheiden, beispielsweise bei Aerosolen, etc., umfassen. Gemäß bestimmten Ausführungsformen ist die Behandlung eine Kondensation und/oder Abscheidung, eine entsprechende Behandlungseinrichtung also ein Kondensator, Abscheider oder ein Kondensat-Abscheider, in dem sowohl eine Kondensation wie auch eine Abscheidung vorgenommen werden. Auch ist es nicht ausgeschlossen, dass mehrere gleiche oder verschiedene Behandlungen an dem ersten Gasstrom durchgeführt werden, beispielsweise zwei oder mehr, z.B. Kondensationen und Abscheidungen, um dem ersten Gasstrom das erste Fluid möglichst vollständig zu entziehen.

Für die Behandlung können auch verschiedene zusätzliche Einrichtung vor der Behandlung vorgesehen sein, um die Behandlung zu erleichtern, beispielsweise eine Komprimierung in einem Kompressor bzw. einer Kompressionsstufe und/oder ein Abkühlen in einer Kühlung bzw. einem Kühler, um so das erste Fluid in die Flüssigphase zu überführen, wodurch es dann zur zweiten Flüssigkeit des zweiten Flüssigkeitsstroms enthaltend das erste Gas wird. Auch nach der Behandlung können weitere Schritte unternommen werden, etwa eine vor dem Dampfstrippen vorgelagerte Gasabscheidung, um bereits aus dem ersten und/oder zweiten Flüssigkeitsstrom enthaltend das erste Gas ausgetretene Gasblasen abzutrennen, ggf. auch nach Herabsetzen des Drucks, um die Gasblasenbildung im ersten und/oder zweiten Flüssigkeitsstrom zu verbessern. Beim Dampfstrippen können auch solche Gasblasen herausgetrennt werden, jedoch soll beim Dampfstrippen darüber hinaus auch gelöstes erstes Gas aus dem ersten und/oder zweiten Flüssigkeitsstrom zumindest teilweise herausgetrennt werden oder sogar im Wesentlichen vollständig, z.B. derart, dass verbleibendes erstes Gas im entgasten ersten und/oder zweiten Flüssigkeitsstrom nach dem Dampfstrippen nur noch in einer Menge von weniger als 10 Vol.%, insbesondere weniger als 5 Vol.%, weiter bevorzugt weniger als 2 Vol.%, oder, insbesondere bei toxischen Substanzen, sogar 1 Vol.% oder weniger, bezogen auf die jeweilige erste Flüssigkeit oder die zweite Flüssigkeit, enthalten ist. Auch ein vollständiges Entgasen des ersten Gases aus dem ersten und/oder zweiten Flüssigkeitsstrom ist beim Dampf-strippen möglich, also eine vollständige Entfernung des ersten Gases.

Im erfindungsgemäßen Verfahren ist das Entgasen des mindestens einen ersten und/oder zweiten Flüssigkeitsstroms enthaltend das erste Gas, wobei das Entgasen derart erfolgt, dass der mindestens eine erste und/oder zweite Flüssigkeitsstrom enthaltend das erste Gas mittels Dampfstrippen in einem Dampfstripper entgast wird, nicht besonders beschränkt, sofern das erste Gas zumindest teilweise aus dem mindestens einen ersten und/oder zweiten Flüssigkeitsstrom abgetrennt wird. Da ein Dampfstrippen erfolgt, erfolgt eine Abtrennung mittels Dampf, also gasförmigem Wasser, als Strippgas.

Strippen ist eine generelle Methode zum Entfernen von Gasen aus Flüssigkeiten. Es wird hierbei ein, üblicherweise inertes, Gas durch die flüssige Phase geleitet, um mit diesem den Partialdruck eines gelösten Gases zu erniedrigen. In Konsequenz tritt es in das Strippgas über und wird so zusammen mit dem Strippgas aus der flüssigen Phase entfernt. Mit dem Strippgas kann jedoch eine weitere Komponente, die negative Eigenschaften haben kann, in das System eingebracht werden. Weiterhin ist apparativer und energetischer Aufwand nötig, um das Strippgas bereitzustellen und ggf. zurückzugewinnen. Es ist zwar auch möglich Luft zu verwenden, die nicht zurückgewonnen werden muss. Allerdings besteht hier die Gefahr, dass sich explosionsfähige Gemische bilden, so dass ein unverhältnismäßig großer Volumenstrom an Luft bereitgestellt werden muss, was einen relativ großen Energieaufwand hervorruft. Es ist bekannt, dass gelöste Gase durch das Durchleiten einer gasförmigen Substanz aus einer flüssigen Phase herausgetrieben, also gestrippt werden können. Das erfindungsgemäße Verfahren basiert auf dem sogenannten Dampf-Strippen, es stellt also einen Sonderfall des Strippens dar, bei dem als Strippgas Dampf, also Wasser in Gasform, verwendet wird.

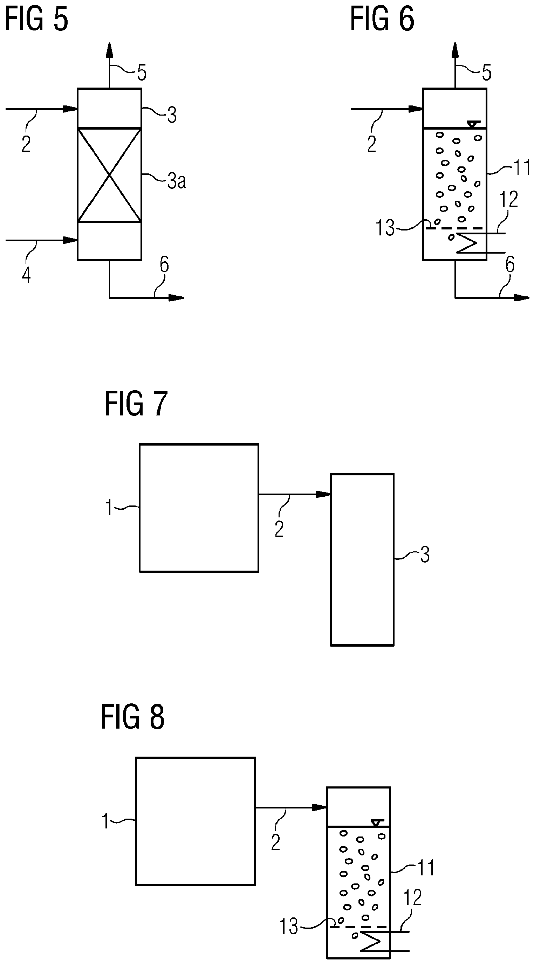

Beispielsweise ist aus der Abwasser-Reinigung bekannt, dass Wasserdampf als Stripp-Medium genutzt werden kann. Das vorliegende Verfahren, wie auch darauf aufbauend die erfindungsgemäße Vorrichtung, basieren auf diesem Prinzip. Es wird hier beispielhaft in der Figur 5 verdeutlicht, welche im Allgemeinen die Funktionsweise eines Dampfstrippers zeigt, also eines Strippers, welcher mit Dampf als Strippgas betrieben wird. Das Dampfstrippen ist jedoch nicht auf diese in Figur 5 gezeigte Ausführungsform beschränkt.

Gemäß der in Figur 5 gezeigten Ausführungsform wird in einen Dampfstripper 3, hier beispielhaft mit einer Schüttung 3a gezeigt, über die Zuleitung 2 (welche einer entsprechenden Ableitung in einer erfindungsgemäßen Vorrichtung, also beispielsweise der ersten und/oder zweiten Ableitung entsprechen kann) ein zu entgasender Flüssigkeitsstrom, beispielsweise umfassend Wasser, zugeführt. In einem erfindungsgemäßen Verfahren ist ein zu entgasender Flüssigkeitsstrom hier der mindestens eine erste und/oder zweite Flüssigkeitsstrom enthaltend das erste Gas. Über eine Dampfzuleitung 4 wird Dampf zugeführt, mit dem das gelöste Gas gestrippt wird. Ziel der Schüttung 3a ist es hier, die Austauschoberfläche zwischen Dampf und Flüssigphase zu erhöhen, um so einen effizienteren Entgasungsprozess zu erzielen. Prinzipiell können aber ebenso beispielsweise Glockenböden eingesetzt werden, auf Einbauten ganz verzichtet werden, wie in einer Blasensäule (die auch keine Dampfzuleitung 4 benötigt, wie nachfolgend beschrieben), oder eine Membran-Dampfentgasung vorgenommen werden. Das entgaste Gas, also im erfindungsgemäßen Verfahren das erste Gas, oder auch ein weiteres Gas, kann durch die Dampfableitung 5 zusammen mit dem Dampf abgeleitet werden, die entgaste Flüssigkeit, beispielsweise im Wesentlichen entgastes Wasser oder sogar reines Wasser, kann über die Flüssigkeitsableitung 6 den Dampfstripper verlassen. Gemäß bestimmten Ausführungsformen weist der Dampfstripper eine Schüttung und/oder Glockenböden auf. Die Art der Schüttung bzw. die Anzahl der Glockenböden ist hierbei nicht besonders beschränkt.

Eine alternative Form einer Dampfstrippers ist in Figur 6 gezeigt, hier beispielhaft als Blasensäule 11. Gemäß bestimmten Ausführungsformen ist der Dampfstripper entsprechend als Blasensäule ausgebildet. Über die Zuleitung 2 erfolgt wiederum die Zufuhr des zu entgasenden, beispielsweise des im erfindungsgemäßen Verfahren ersten und/oder zweiten, Flüssigkeitsstroms - beispielsweise enthaltend Wasser, z.B. aus einer Wasser-, CO₂- oder Chloralkali-Elektrolyse - enthaltend das zu entgasende, beispielsweise im erfindungsgemäßen Verfahren erste, Gas. Der Dampf wird in dieser Variante nicht extern zugeführt, sondern durch eine elektrische Heizung 12 in einem unteren Teil der Blasensäule 11 direkt im Dampfstripper erzeugt, was eine besonders einfache Variante darstellt. Ein hier gezeigtes optionales Lochblech 13 oberhalb der elektrischen Heizung 12 kann für eine gleichmäßige Verteilung der erzeugten Blasen innerhalb des Dampfstrippers sorgen. Die elektrische Heizung 12 sorgt gemäß bestimmten Ausführungsformen, beispielsweise mit Wasser als erster und/oder zweiter Flüssigkeit, indirekt auch dafür, dass das zu entgasende Medium, also beispielsweise der erste und/oder zweite Flüssigkeitsstrom, auf Siedetemperatur gebracht wird, so dass ein ausreichender Anteil Dampf für das Strippen nutzbar bleibt und zusammen mit dem gestrippten ersten Gas, z.B. Wasserstoff, über Dampfableitung 5 den Dampfstripper verlässt.

Optional kann gemäß bestimmten Ausführungsformen ein Luftkühler vorgesehen werden, mit dem der entweichende Gaststrom umfassend Dampf abgekühlt wird und ein Teil des Dampfs wieder zur Kondensation gebracht wird. Dieser kann dann beispielsweise in einem Phasentrenner abgeschieden und in das zu entgasende Medium zurückgeführt werden, um so die Effizienz zu steigern. Entsprechend weist ein Dampfstripper in einem erfindungsgemäßen Verfahren und/oder in einer erfindungsgemäßen Vorrichtung gemäß bestimmten Ausführungsformen eine Dampfableitung auf, bevorzugt mit einem Luftkühler und insbesondere mit einem Phasentrenner, um Dampf wieder als Wasser abzutrennen und zum Dampfstripper über eine entsprechende Wasserrückführung rückführen zu können. Alternativ kann auch der Dampf zusammen mit dem ersten Gas abgegeben werden, beispielsweise bei unproblematischen Gaskonzentrationen und Gasen auch in die Atmosphäre.

Über die Flüssigkeitsableitung 6 kann wiederum die entgaste Flüssigkeit abgegeben werden. Gemäß bestimmten Ausführungsformen umfasst der Dampfstripper eine Flüssigkeitsableitung, welche insbesondere einen Siphon umfasst, um einen ausreichenden Pegel an Flüssigkeit im Dampfstripper sicherzustellen. Die entgaste Flüssigkeit, z.B. das entgaste Wasser kann gemäß bestimmten Ausführungsformen, z.B. wenn es keine gefährlichen Mengen erstes Gas, z.B. Wasserstoff, mehr enthält, gefahrlos in einen Ausguss geleitet werden.

Gemäß bestimmten Ausführungsformen umfasst ein Dampfstripper in einem erfindungsgemäßen Verfahren bzw. in einer erfindungsgemäßen Vorrichtung eine Inertgaszuleitung, über die ein inertes Gas wie z.B. Stickstoff zugeführt werden kann. Auch wenn im kontinuierlichen Betrieb ein solches nicht benötigt wird, kann es beim An- und Abfahren der Anlage vorteilhaft sein, um Luft aus dem Dampfstripper zu verdrängen.

Gemäß bestimmten Ausführungsformen hat die zu entgasende Flüssigkeit für ein effizientes Dampfstrippen möglichst den Siedepunkt (z.B. maximal 5°C darunter, bevorzugt maximal 2°C darunter, insbesondere maximal 1°C darunter) oder hat sogar den Siedepunkt bei dem herrschenden Druck im System, um ein Kondensieren des Dampfes zu verringern oder sogar zu verhindern, da dieser ansonsten für das Strippen ggf. nicht mehr zu Verfügung stünde. Hierfür kann beispielsweise der entsprechende Flüssigkeitsstrom vorgewärmt werden.

Gemäß bestimmten Ausführungsformen wird der mindestens eine erste und/oder zweite Flüssigkeitsstrom enthaltend das erste Gas vor dem Dampfstrippen vorgewärmt. Das Vorwärmen ist hierbei nicht besonders beschränkt, erfolgt bevorzugt jedoch auf eine Temperatur knapp unter den Siedepunkt der ersten und/oder zweiten Flüssigkeit, beispielsweise maximal 5°C darunter, bevorzugt maximal 2°C darunter, insbesondere maximal 1°C darunter. Z.B. wäre eine bevorzugte Temperatur zum Vorwärmen für Wasser als erste und/oder zweite Flüssigkeit bei Normaldruck mindestens 95°C, bevorzugt mindestens 98°C, oder sogar mindestens 99°C. Dies ermöglicht, ein effizientes Dampfstrippen sowie die Vermeidung von Ungleichgewichten im Stripper selbst.

Gemäß bestimmten Ausführungsformen erfolgt das Vorwärmen unter Verwendung des nach dem Dampfstrippen entgasten ersten und/oder zweiten Flüssigkeitsstromes. Ein Vorwärmen der zur entgasenden Flüssigkeit mit Hilfe der entgasten Flüssigkeit kann den Energiebedarf erniedrigen. Dies kann beispielsweise über einen oder mehrere Wärmetauscher erfolgen. Ein nötiger Wärmetauscher ist in den Figuren nicht gezeigt. Gemäß bestimmten Ausführungsformen kann aber auch einfach eine Vorbeileitung der entsprechenden Ströme ausreichen, z.B. wenn die anfallenden Flüssigkeitsmengen zu klein sind, um einen Wärmetauscher vorzusehen.

Gemäß bestimmten Ausführungsformen erfolgt vor dem Dampf-strippen eine Druckerniedrigung. Hierdurch kann das erste Gas bereits aus dem ersten und/oder zweiten Flüssigkeitsstrom zumindest teilweise herausgelöst werden.

Gemäß bestimmten Ausführungsformen wird das im Dampfstripper abgetrennte erste Gas in den abgeleiteten ersten Gasstrom umfassend das erste Fluid und das erste Gas und/oder den Elektrolyseur zurückgeführt. Hierdurch kann beispielsweise eine Inertisierung des Dampfstrippers beim Anfahren oder Abschalten entfallen.

Gemäß bestimmten Ausführungsformen wird der Druck im Dampf-stripper derart eingestellt, dass er mindestens dem Druck an einer Stelle entspricht, zu der das abgetrennte erste Gas zurückgeführt wird. Hierdurch sind keine weiteren Einbauten, insbesondere zur Druckerhöhung, erforderlich, und eine Druckeinstellung im Dampfstripper ist einfach über die Einstellung der Dampferzeugung bzw. - zuleitung und/oder andere Maßnahmen möglich, sodass der Prozess effizienter wird.

Ein weiterer Aspekt der vorliegenden Erfindung betrifft eine Vorrichtung zum Entgasen mindestens eines ersten und/oder zweiten Flüssigkeitsstroms enthaltend ein erstes Gas, der aus einem Elektrolyseur abgeleitet wird und/oder der durch Behandlung mindestens eines aus einem Elektrolyseur abgeleiteten ersten Gasstroms umfassend ein erstes Fluid und das erste Gas gebildet wird, umfassend:
- einen Elektrolyseur, der dazu ausgebildet ist, mindestens ein Edukt in dem Elektrolyseur zu mindestens einem gasförmigen Produkt umfassend das erste Gas umzusetzen,
   wobei der Elektrolyseur zudem derart ausgestaltet ist, dass durch Einbringen des ersten Gases in eine erste Flüssigkeit im Elektrolyseur einen ersten Flüssigkeitsstrom enthaltend das erste Gas gebildet werden kann, und/oder dass durch Einbringen des erstem Fluids im Elektrolyseur in das gasförmige Produkt umfassend das erste Gas ein erster Gasstrom umfassend das erste Fluid und das erste Gas gebildet werden kann;
- eine erste Ableitung zum Ableiten des mindestens einen ersten Flüssigkeitsstroms enthaltend das erste Gas aus dem Elektrolyseur, die dazu ausgebildet ist, den mindestens einen ersten Flüssigkeitsstrom enthaltend das erste Gas aus dem Elektrolyseur abzuleiten; und/oder
   - eine erste Gasableitung zum Ableiten des mindestens einen ersten Gasstroms umfassend das erste Fluid und das erste Gas aus dem Elektrolyseur, die dazu ausgebildet ist, den mindestens einen ersten Gasstrom umfassend das erste Fluid und das erste Gas aus dem Elektrolyseur abzuleiten,
   - eine Behandlungseinrichtung zum Behandeln des mindestens einen ersten Gasstromes umfassend das erste Fluid und das erste Gas, die dazu ausgebildet ist, den mindestens einen ersten Gasstrom umfassend das erste Fluid und das erste Gas derart zu behandeln, dass mindestens ein zweiter Gasstrom enthaltend das erste Gas und der mindestens eine zweite Flüssigkeitsstrom enthaltend das erste Gas entstehen, wobei die erste Gasableitung zudem dazu ausgebildet ist, den mindestens einen ersten Gasstrom umfassend das erste Fluid und das erste Gas der Behandlungseinrichtung zuzuführen, und
   - eine zweite Ableitung zum Ableiten des mindestens einen zweiten Flüssigkeitsstroms enthaltend das erste Gas, welche dazu ausgebildet ist, den mindestens einen zweiten Flüssigkeitsstrom enthaltend das erste Gas aus der Behandlungseinrichtung abzuleiten;
   weiter umfassend
- mindestens einen Dampfstripper, der dazu ausgebildet ist, das erste Gas mittels Dampfstrippen aus dem mindestens einen ersten und/oder zweiten Flüssigkeitsstrom enthaltend das erste Gas zumindest teilweise abzutrennen, wobei dem Dampfstripper der erste Flüssigkeitsstrom enthaltend das erste Gas über die erste Ableitung und/oder der zweite Flüssigkeitsstrom enthaltend das erste Gas über die zweite Ableitung zugeführt werden.

Mit der erfindungsgemäßen Vorrichtung kann insbesondere das erfindungsgemäße Verfahren durchgeführt werden. Bestimmte Ausführungsformen, Ausgestaltungen und Anordnungen, welche in Zusammenhang mit dem erfindungsgemäßen Verfahren beschrieben sind, finden entsprechend auch bei der erfindungsgemäßen Vorrichtung Anwendung, wie auch vice versa.

In der Vorrichtung ist der Elektrolyseur nicht besonders beschränkt, sofern es möglich ist, darin ein Edukt zu mindestens einem gasförmigen Produkt umfassend ein erstes Gas umzusetzen. Hierfür weist der Elektrolyseur üblicherweise eine Anode und eine Kathode auf, wobei zumindest an einer dieser beiden Elektroden eine Umsetzung eines Edukts zu einem gasförmigen Produkt vonstattengeht. Je nach Edukt bzw. Edukten für Anode und/oder Kathode kann sich auch der Elektrolyseuraufbau unterscheiden, mit entsprechenden Zuleitungen für Edukt, sofern erforderlich, optional Membranen und/oder anderen Separatoren zwischen den Elektroden, Ableitungen für Elektrolyt als beispielsweise erste Ableitung und/oder Ableitungen als erste Gasableitung für den Produktgasstrom als ersten Gasstrom umfassend ein erstes Fluid und ein erstes Gas, zum Beispiel an einem Gasraum an oder um eine Elektrode, etc. Es ist nicht ausgeschlossen, dass mehrere Zu- und/oder Ableitungen vorgesehen sind, so beispielsweise eine Zuleitung für einen Kathodenraum, eine erste Zuleitung für einen Elektrolytraum, eine erste Ableitung aus dem Elektrolytraum, eine Zuleitung zu einem Anodenraum, eine erste Gasableitung und/oder eine weitere Gasableitung (oder auch andere Leitung bei Bilden eines Flüssigprodukts) aus dem Kathoden- und/oder Anodenraum, etc. Der Elektrolyseur umfasst jedoch mindestens eine Kathode und eine Anode, um eine Umsetzung mindestens eines Edukts zu einem gasförmigen Produkt zu erzielen.

Weiterhin ist die erste Ableitung nicht besonders beschränkt, sofern sie den mindestens einen ersten Flüssigkeitsstrom enthaltend das erste Gas ableiten kann. Auch können mehrere Ableitungen, z.B. bei mehreren Elektrolyträumen, wie beschrieben, für Flüssigkeitsströme vorgesehen sein.

Ebenso ist die erste Gasableitung nicht besonders beschränkt, sofern sie den mindestens einen Gasstrom umfassend das erste Fluid und das erste Gas aus dem Elektrolyseur ableiten kann. Auch hier können für den Elektrolyseur mehrere Gasableitungen, z.B. für einen Anodenraum und einen Kathodenraum, vorgesehen sein, wie beschrieben.

Darüber hinaus ist die Behandlungseinrichtung zum Behandeln des mindestens einen ersten Gasstromes umfassend das erste Fluid und das erste Gas nicht besonders beschränkt.

Gemäß bestimmten Ausführungsformen ist die Behandlungseinrichtung also ein Kondensator, Abscheider oder ein Kondensat-Abscheider, in dem sowohl eine Kondensation wie auch eine Abscheidung vorgenommen werden. Auch ist es nicht ausgeschlossen, dass mehrere gleiche oder verschiedene Behandlungseinrichtungen vorhanden sind, beispielsweise zwei oder mehr, z.B. Kondensatoren, Abscheider oder Kondensat-Abscheider.

Für die Behandlung können auch verschiedene zusätzliche Einrichtung in Strömungsrichtung vor der Behandlungseinrichtung vorgesehen sein, um die Behandlung zu erleichtern, beispielsweise ein Kompressor bzw. eine Kompressionsstufe und/oder eine Kühlung bzw. ein Kühler, um so das erste Fluid in die Flüssigphase zu überführen, wodurch es dann zur zweiten Flüssigkeit des zweiten Flüssigkeitsstroms enthaltend das erste Gas wird. Auch nach der Behandlungseinrichtung können in Strömungsrichtung vor dem Dampfstripper weitere Einrichtungen vorgesehen sein, etwa ein vor dem Dampfstripper vorgelagerter Gasabscheider, um bereits aus dem ersten und/oder zweiten Flüssigkeitsstrom enthaltend das erste Gas ausgetretene Gasblasen abzutrennen, ggf. auch nach Herabsetzen des Drucks mit einem Ventil oder ähnlichem, um die Gasblasenbildung im ersten und/oder zweiten Flüssigkeitsstrom zu verbessern.

Darüber hinaus ist auch die zweite Ableitung nicht besonders beschränkt, sofern sie den mindestens einen zweiten Flüssigkeitsstrom enthaltend das erste Gas aus der Behandlungseinrichtung ableiten und zum Dampfstripper zuleiten kann. Wie beschrieben können in der zweiten Ableitung weitere Einrichtungen vorhanden sein, wie auch in der ersten Ableitung und der ersten Gasableitung, z.B. Kompressoren, Heizelemente, Kühler, Ventile, Sensoren, etc.

In der erfindungsgemäßen Vorrichtung sind in einer Variante die erste Ableitung mit Zuleitung zum Dampfstripper, in einer zweiten Variante die erste Gasableitung, die Behandlungseinrichtung, und die zweite Ableitung mit Zuleitung zum Dampf-stripper, und in einer dritten Variante sowohl die erste Ableitung mit Zuleitung zu einem Dampfstripper als auch die erste Gasableitung, die Behandlungseinrichtung, und die zweite Ableitung mit Zuleitung zu einem Dampfstripper vorhanden, wobei in der dritten Variante die Zuleitung zu einem gemeinsamen Dampfstripper oder zu getrennten (ersten und zweiten) Dampfstrippern erfolgen kann, analog den im erfindungsgemäßen Verfahren beschriebenen Varianten.

Der Dampfstripper ist erfindungsgemäß nicht besonders beschränkt. Er kann beispielsweise als Blasensäule konzipiert sein, oder als Stripper mit Schüttung und/oder Glockenböden. Gemäß bestimmten Ausführungsformen weist der mindestens eine Dampfstripper eine Schüttung und/oder Glockenböden auf. Die Art der Schüttung bzw. die Anzahl der Glockenböden ist hierbei nicht besonders beschränkt.

Gemäß bestimmten Ausführungsformen ist der Dampfstripper als Blasensäule ausgebildet, insbesondere wie oben beim erfindungsgemäßen Verfahren beschrieben. Hierbei kann die Blasensäule eine Heizung, beispielsweise eine elektrische Heizung, an einem unteren Ende aufweisen, sowie optional ein Lochblech darüber zur besseren Verteilung des Dampfs.

Weiterhin kann der Dampfstripper mindestens eine Flüssigkeitsableitung, bevorzugt an einem unteren Ende, bevorzugt mit einer Einrichtung zum Halten eines Flüssigkeitspegels im Dampfstripper, z.B. einem Siphon, sowie eine Dampfableitung, bevorzugt an einem oberen Ende, aufweisen. Die Flüssigkeitsableitung kann die entgaste Flüssigkeit einfach ableiten, aber auch als Rückführung zum Elektrolyseur, oder zu einer Vorbehandlungseinrichtung, z.B. zum Befeuchten eines umzusetzenden Edukts, z.B. Eduktgases wie CO₂, und/oder zur Vorbereitung oder Aufbereiten eines Elektrolyten, als Flüssigkeitsrückführleitung ausgebildet sein.

Optional kann gemäß bestimmten Ausführungsformen ein Luftkühler vorgesehen werden, mit dem der entweichende Gaststrom umfassend Dampf abgekühlt wird und ein Teil des Dampfs wieder zur Kondensation gebracht wird. Dieser abgeschiedene Dampf kann dann beispielsweise in einem in Strömungsrichtung nachfolgenden optionalen Phasentrenner abgeschieden und in das zu entgasende Medium zurückgeführt werden, um so die Effizienz zu steigern. Entsprechend weist ein Dampfstripper in einem erfindungsgemäßen Verfahren und/oder in einer erfindungsgemäßen Vorrichtung gemäß bestimmten Ausführungsformen eine Dampfableitung auf, bevorzugt mit einem Luftkühler und insbesondere mit einem Phasentrenner, um Dampf wieder als Wasser abzutrennen und zum Dampfstripper über eine entsprechende Wasserrückführung rückführen zu können. Alternativ kann auch der Dampf zusammen mit dem ersten Gas abgegeben werden, beispielsweise bei unproblematischen Gaskonzentrationen und Gasen auch in die Atmosphäre.

Beispielhafte Ausführungsformen für erfindungsgemäße Vorrichtungen sind in Figuren 7 bis 9 schematisch gezeigt.

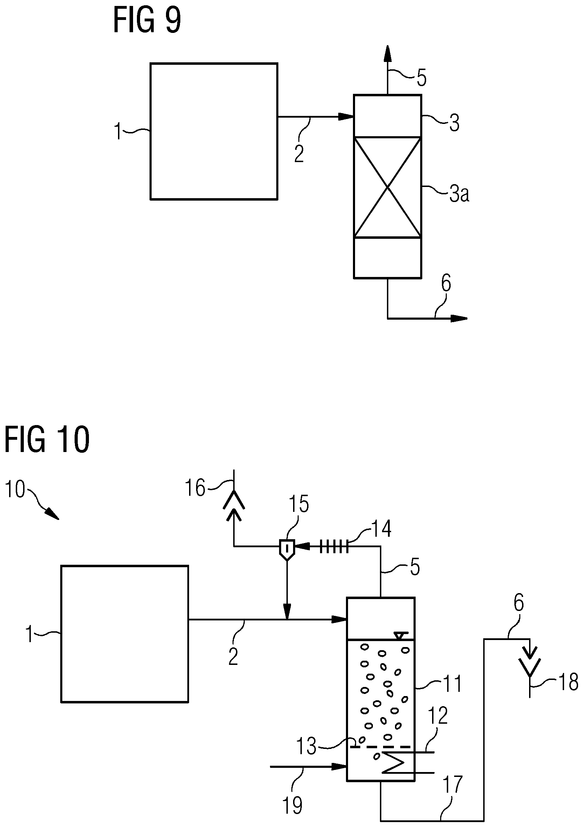

Die Figur 7 zeigt dabei eine Vorrichtung der ersten Variante, in der aus dem Elektrolyseur 1 über die Zuleitung 2 als erste Ableitung dem Dampfstripper 3 der erste Flüssigkeitsstrom umfassend das erste Gas zugeführt wird. In Figur 8 wird der Dampfstripper 3 durch eine Blasensäule 11 mit elektrischer Heizung 12 und Lochblech 13 ersetzt. In der in Figur 9 gezeigten Variante der Figur 7 findet sich im Dampfstripper 3 eine Schüttung 3a, und am Dampfstripper 3 finden sich eine Dampfableitung 5 und eine Flüssigkeitsableitung 6.

Gemäß bestimmten Ausführungsformen umfasst die Vorrichtung weiter einen ersten und/oder zweiten Wärmetauscher zum Vorwärmen des mindestens einen ersten und/oder zweiten Flüssigkeitsstroms enthaltend das erste Gas, der jeweils dazu ausgebildet ist, den mindestens einen ersten und/oder zweiten Flüssigkeitsstrom enthaltend das erste Gas vor dem Dampf-strippen in der ersten und/oder zweiten Ableitung vorzuwärmen. Der erste und/oder zweite Wärmetauscher sind nicht besonders beschränkt.

Gemäß bestimmten Ausführungsformen umfasst die Vorrichtung weiter eine dritte und/oder vierte Ableitung zum Ableiten des entgasten ersten und/oder zweiten Flüssigkeitsstroms, die mit dem mindestens einen Dampfstripper verbunden und dazu ausgebildet ist, einen ersten und/oder zweiten entgasten Flüssigkeitsstrom aus dem mindestens einen Dampfstripper abzuleiten, wobei die dritte und/oder vierte Ableitung derart mit dem ersten und/oder zweiten Wärmetauscher verbunden ist, dass dem ersten und/oder zweiten Wärmetauscher über die dritte und/oder vierte Ableitung der nach dem Dampfstrippen entgaste erste und/oder zweite Flüssigkeitsstrom derart zugeführt werden kann, dass damit zumindest teilweise das Vorwärmen des mindestens einen ersten und/oder zweiten Flüssigkeitsstroms enthaltend das erste Gas erfolgen kann. Auch die dritte und/oder vierte Ableitung sind nicht besonders beschränkt und entsprechen beispielsweise der Flüssigkeitsableitung aus dem Dampfstripper bzw. der Blasensäule in den entsprechenden Figuren. Wenn nur ein Dampfstripper vorhanden ist, können die dritte und vierte Ableitung beide aus diesem abgehen, wenn z.B. eine erste und eine zweite Ableitung vorhanden sind. Bei zwei Dampfstrippern kann die dritte Ableitung zum ersten und/oder zweiten Wärmetauscher gehen, wie auch die vierte Ableitung, wobei beispielsweise die dritte Ableitung aus dem dann ersten Dampfstripper den Dampf enthaltend das erste Gas ableiten kann und die dritte Ableitung entsprechend den Dampf enthaltend das erste Gas aus dem dann zweiten Dampfstripper.

Gemäß bestimmten Ausführungsformen umfasst die Vorrichtung weiter mindestens eine Einrichtung zur Druckerniedrigung, die in der ersten und/oder zweiten Ableitung vorgesehen und dazu ausgebildet ist, den mindestens einen ersten und/oder zweiten Flüssigkeitsstrom enthaltend das erste Gas einer Druckerniedrigung zu unterziehen. Die Einrichtung zur Druckerniedrigung ist nicht besonders beschränkt und kann beispielsweise ein Ventil, eine Düse, ein Druckminderventil, Kondensatableiter etc., sein.

Gemäß bestimmten Ausführungsformen umfasst die Vorrichtung weiter eine Rückführungsleitung, die den Dampfstripper mit der ersten Gasableitung und/oder dem Elektrolyseur verbindet und dazu ausgebildet ist, das im Dampfstripper abgetrennte erste Gas in den abgeleiteten ersten Gasstrom umfassend das erste Fluid und das erste Gas und/oder den Elektrolyseur zurückzuführen.

Gemäß bestimmten Ausführungsformen ist der Dampfstripper derart ausgestaltet, dass er das Gas mit mindestens einem Druck in die Rückführungsleitung abgibt, der dem Druck an einer Stelle entspricht, zu der das abgetrennte erste Gas zurückgeführt wird. Hierfür können beispielsweise auch geeignete Drucksensoren, etc., vorgesehen sein, wie auch eine entsprechende Steuereinrichtung zum Steuern von Einrichtungen zur Druck- und/oder Temperaturkontrolle. Auch kann beispielsweise die Funktion des Dampfstrippers durch mindestens einen sicherheitsgerichteten Temperatursensor überwacht werden.

Die obigen Ausführungsformen, Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung. Insbesondere wird der Fachmann auch Einzelaspekte als Verbesserungen oder Ergänzungen zu der jeweiligen Grundform der vorliegenden Erfindung hinzufügen.

Die Erfindung wird im Anschluss mit Bezug auf verschiedene Beispiele davon weiter im Detail erläutert. Die Erfindung ist jedoch nicht auf diese Beispiele beschränkt.

### Beispiel 1

Eine erste beispielhafte erfindungsgemäße Vorrichtung für die Entgasung von Abwasser aus einer Elektrolyse 10 ist schematisch in Figur 10 gezeigt, anhand derer auch Vorteile der vorliegenden Erfindung herausgearbeitet werden.

In Figur 10 soll exemplarisch die Entgasung von 1 kg/h Abwasser, welches bei 1 atm Wasserstoff gesättigt ist, quantitativ verdeutlicht werden. In diesem Beispiel wird das Wasser verworfen und der entgaste Wasserstoff an die Atmosphäre abgegeben.

Das zu entgasende Wasser, welches aus einem Wasserelektrolyseur als Elektrolyseur 1, beispielsweise aus einer Trocknung oder Kompression, oder auch aus verbrauchtem Elektrolyt, stammt und bei 1 atm mit Wasserstoff gesättigt ist, gelangt über Zuleitung 2 in die Blasensäule 11, die hier als Dampf-stripper verwendet wird. Der Dampf wird in dieser Variante nicht extern zugeführt, sondern durch die elektrische Heizung 12 direkt im Dampfstripper erzeugt, was eine besonders einfache Variante darstellt. Das Lochblech 13 sorgt für eine gleichmäßige Verteilung der erzeugten Blasen innerhalb des Dampfstrippers. Die elektrische Heizung 12 sorgt indirekt auch dafür, dass das zu entgasende Medium auf Siedetemperatur gebracht wird, so dass ein ausreichender Anteil Dampf für das Strippen nutzbar bleibt und zusammen mit dem gestrippten Wasserstoff über Dampfableitung 5 den Dampfstripper verlässt. Optional kann ein Luftkühler 14 vorgesehen werden, mit dem der Gaststrom abgekühlt wird und ein Teil des Dampfs wieder zur Kondensation gebracht wird. Er wird im Phasentrenner 15 abgeschieden und in das zu entgasende Medium zurückgeführt. Die verbleibende Gasphase wird an die Atmosphäre über Abgasableitung 16 abgegeben. Das entgaste Wasser wird über Flüssigkeitsableitung 6 umfassend einen Siphon 17 abgeführt und kann, da es keine gefährlichen Mengen Wasserstoff mehr enthält, gefahrlos in einen Ausguss 18 geleitet werden. Der Siphon 17 stellt einen ausreichenden Flüssigkeitspegel innerhalb des Dampfstrippers sicher. Inertgaszuleitung 19 ist für die Zuführung eines inerten Gases vorgesehen und wird üblicherweise lediglich beim Anfahren und Abschalten benötigt, um Luft aus dem Dampfstripper zu verdrängen, auch wenn im kontinuierlichen Betrieb eine Inertgaszufuhr nicht benötigt wird.

Der Energiebedarf der elektrischen Heizung 12 lässt sich für den angenommenen Fall einfach abschätzen. Ein bei 1 atm gesättigter Wasserstrom von 1 kg/h enthält circa 1,5 mg/h Wasserstoff, wobei die Temperaturabhängigkeit der Löslichkeit nur eine untergeordnete Rolle spielt und deshalb bei dieser Betrachtung vernachlässigt wird. Damit das Abwasser gefahrlos in eine geschlossene Kanalisation geleitet werden kann, muss der Partialdruck des gelösten Wasserstoffs auf beispielsweise 0,01 atm abgesenkt werden. Sollte dann nämlich der Wasserstoff innerhalb eines geschlossenen Volumens bei Atmosphärendruck entgasen, könnte maximal ein Stoffmengenanteil von 1 Vol.% Wasserstoff im Gas entstehen, was deutlich unter der unteren Explosionsgrenze von 4 Vol.% liegt. Somit wäre selbst im ungünstigsten Fall eine explosive Mischung innerhalb der Kanalisation ausgeschlossen. Dementsprechend muss allerdings der allergrößte Teil des Wasserstoffs aus dem Wasserstrom ausgetrieben werden und in Konsequenz der Stoffmengenstrom des Dampfs ungefähr dem Hundertfachen des Stoffmengenstroms des ausgetriebenen Wasserstoffs betragen. Für das Dampfstrippen von 1,5 mg/h Wasserstoff (circa 7,5·10⁻⁴ mol/h) sind etwa 1,35 g/h Dampf nötig (0,075 mol/h). Die nötige Menge an Dampf beträgt also deutlich weniger als 1 % der zu entgasenden Wasser-Menge und ist somit relativ gering. Dieser Umstand lässt sich auf die sehr geringe Löslichkeit von Wasserstoff zurückführen.

Mit einer Verdampfungsenthalpie von 42 kJ/mol müsste für die Erzeugung von 0,075 mol/h Dampf die Leistung der elektrischen Heizung 12 etwa 1 W betragen, wobei zusätzlich ein Energiebedarf für das Erhitzen auf Siedetemperatur des zu entgasenden Abwassers aufgebracht werden muss. Dieser Anteil der elektrischen Leistung hängt stark von der Ausgangstemperatur ab. Wenn man 25 °C als Ausgangstemperatur annimmt, ist dieser Bedarf mit circa 87 W deutlich größer als der Bedarf für die Dampferzeugung.

Im Vergleich mit dem Heizwert des abgetrennten Wasserstoffs von etwa 0,05 W wird deutlich, dass der Aufwand für das Dampfstrippen um ein Vielfaches höher liegt. Im Vergleich zur Elektrolyse selbst ist der Energiebedarf jedoch vernachlässigbar. Ein besonderer Vorteil der Erfindung liegt in einem einfachen und robusten Gesamtprozess, der zu einem entgasten Abwasser führt, welches sicher ohne Beschränkungen verworfen werden kann. Es ist kein aufwändiges Engineering und auch keine komplexen Sicherheitsbetrachtungen nötig. Der Ansatz ist vielseitig und flexibel anwendbar.

### Beispiel 2

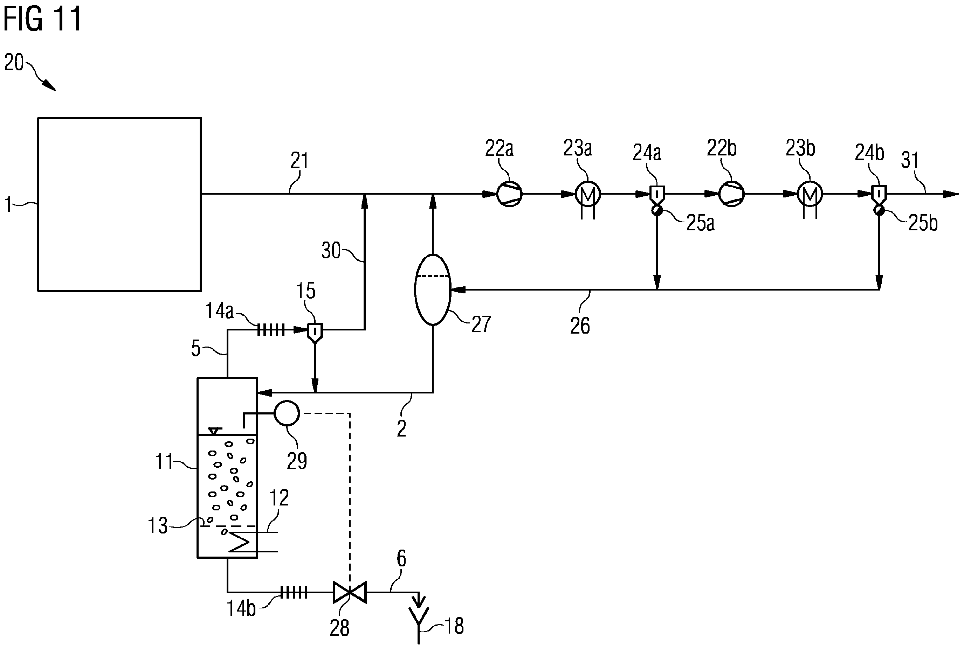

Das folgende in Figur 11 gezeigte Ausführungsbeispiel zeigt eine erfindungsgemäße Entgasung eines Kondensats, welches bei einer Kompression von elektrolytisch hergestelltem Wasserstoff anfällt. Die Entgasung läuft in diesem Beispiel bei 5 bar(a) ab. Hierbei findet auch eine Rückführung von Wasserstoff und Kondensat, das bei der Kompression anfällt, statt.

In der in Figur 11 gezeigten Vorrichtung mit einer Entgasung von Kondensat aus einer Kompression 10 erfolgt exemplarisch eine erfindungsgemäße Entgasung eines Kondensats, welches bei der Kompression von beispielhaft elektrolytisch erzeugtem Wasserstoff im Elektrolyseur 1 anfällt. Hierbei soll der entgaste Wasserstoff in den Prozess vor der Kompression zurückgeführt werden obwohl an dieser Stelle bereits ein erhöhter Druck herrscht. Um eine solche Rückführung ohne zusätzlichen Kompressor zu ermöglichen, läuft die Entgasung im Dampfstripper bei entsprechend höherem Druck ab.

Feuchter Wasserstoff als erster Gasstrom (umfassend Wasserstoff als erstes Gas und Wasser als erstes Fluid) wird über die erste Gasableitung 21 zur ersten Kompressionsstufe 22a geleitet, in der er komprimiert wird. Nach einer Zwischenkühlung in einem ersten Kühler 23a, beispielsweise einem Wärmetauscher, wird entstehendes Kondensat im ersten Kondensat-Abscheider 24a als erste Behandlungseinrichtung abgetrennt, wobei in einem ersten Kondensat-Ableiter 25a, z.B. einem Glockenkondensatableiter, eine Druckentspannung für das abgetrennte Kondensat erfolgt. In einer zweiten Kompressionsstufe 22b mit zweitem Kühler 23b, zweitem Kondensat-Abscheider 24b als zweiter Behandlungseinrichtung und zweitem Kondensat-Ableiter 25b wird weiter komprimiert und zusätzliches Kondensat abgetrennt und entspannt. Der komprimierte Wasserstoff verlässt als zweiter Gasstrom über die zweite Gasableitung 31 den Kompressionsstrang. Das Kondensat aus 25a und 25b wird in der zweiten Ableitung 26 zur Weiterführung des Kondensats gesammelt und in einen Phasentrenner 27, z.B. einen Gasabscheider, geleitet. Dieser ermöglicht ein teilweises Entgasen, wobei der Sättigungsdruck des Wasserstoffs im Kondensat bis zum Ausgangsdruck des Wasserstoffs in der ersten Gasableitung 21 herabgesetzt werden kann, in diesem Beispiel 5 bar(a). Das Kondensat, das den Phasentrenner 27 über Zuleitung 2 zur Blasensäule 11 (erfindungsgemäß hier anzusehen als Teil der zweiten Ableitung) verlässt, enthält jedoch noch zu viel Wasserstoff, um gefahrlos verworfen werden zu können. Hierfür wird die Blasensäure 11 als Dampfstripper vorgesehen. Sie entspricht im Prinzip der Blasensäule 11 aus Figur 10, wobei diese jedoch bei erhöhtem Druck betrieben wird. Daher lässt sich der Füllstand im Dampf-Stripper nicht durch ein einfaches Siphon sicherstellen, stattdessen geschieht dies über eine Füllstandsregelung mittels Druckregelventil 28 in der Flüssigkeitsleitung 6 zum Ausguss 18 - hier zudem mit Luftkühler 14b, sowie eine Füllstandssonde 29. Ein weiterer Unterschied zum Konzept in Figur 10 ist, dass keine Inertisierung vorgesehen ist, die Inertgaszuleitung 19 aus Figur 10 entfällt. Diese Vereinfachung ist hier möglich, da das Abgas nicht in die Atmosphäre, sondern nach der Dampfableitung 5 in das System über Rückführungsleitung 30 zurückgeleitet wird und somit keine Luft aus der Umgebung in den Dampf-Stripper gelangen kann, wobei hier auch ein Luftkühler 14a und ein Phasentrenner 15 zum Abtrennen von kondensiertem Dampf vorgesehen ist.

In dem in Figur 11 gezeigten Beispiel werden exemplarisch 200 kg/h Wasserstoff ausgehend von 5 bar(a) zunächst in der ersten Kompressionsstufe 22a auf 12,5 bar(a) und darauffolgend auf 30 bar(a) in der zweiten Kompressionsstufe 22b komprimiert. Der angenommene Massenstrom an Wasserstoff entspricht dem Produktgasstrom einer Wasserelektrolyse der "10 MW-Klasse". Unter der Annahme, dass der Wasserstoffstrom bei 35 °C gesättigt ist, gelangen etwa 20 kg/h Feuchte über die erste Gasableitung 21 in die Kompression. Es darf angenommen werden, dass die Massenströme an Wasser, die über die Weiterleitung aus dem Phasentrenner 27 und die Rückführungsleitung 30 aus dem Phasentrenner 15 in den Wasserstoffstrom zurückgeleitet werden, vernachlässigbar klein sind. Von den circa 20 kg/h Feuchte werden nach der ersten Kompressionsstufe etwa 12 kg/h und nach der zweiten Kompressionsstufe etwa 5 kg/h kondensiert und abgetrennt, wobei bei dieser Abschätzung eine Kondensationstemperatur von 35 °C angenommen wurde. Mit diesen 17 kg/h Kondensat werden ungefähr 0,45 g/h gelöster Wasserstoff mitgeführt, welcher für ein sicheres Ableiten des Kondensats entgast werden muss. Dies geschieht zum größten Teil (etwa zwei Drittel) bereits im Phasentrenner 27, welcher bei ungefähr 5 bar(a) betrieben wird. Es verbleiben ungefähr 0,13 g/h gelöster Wasserstoff in den 17 kg/h Kondensat, welche in der Blasensäule 11 entgast werden.

Die Menge an Strippdampf, die benötigt wird, um den WasserStrom zu entgasen, lässt sich wie bereits oben unter der Anforderung, dass sich selbst im ungünstigsten Fall keine explosionsfähige Atmosphäre bilden darf, bestimmen. Der maximale Partialdruck an gelöstem Wasserstoff darf wieder in der entgasten Flüssigkeit maximal 0,01 atm betragen. Da jedoch der Dampfstripper in diesem Beispiel bei 5 bar(a) betrieben wird, muss der Stoffmengenstrom des Strippdampfs etwa dem 500-fachen Wert des Wasserstoffs entsprechen, begründet über ideales Gasgesetz und Gesetz von Dalton. In der Dampfableitung 5 in Figur 3 gilt: *p*_{H2O} ≈ 5 bar (a), *p*_{H2} ≈ 0,01 bar(a)). Es werden ungefähr 0,6 kg/h Dampf für das Strippen benötigt. Der Energieaufwand für die Dampferzeugung beträgt etwa 0,4 kW. Für das Vorheizen des zu entgasenden Kondensats müssen etwa 2,5 kW aufgebracht werden, wobei berücksichtigt wurde, dass der Siedepunkt bei 5 bar(a) im Bereich von 150 °C bis 160 °C liegt, und somit auf höhere Temperaturen erhitzt werden muss. Der benötigte Energieaufwand ist verglichen mit der Elektrolyseleistung von etwa 10 MW sehr gering und wird durch die erfindungsgemäßen Vorteile mehr als nur aufgewogen. Alternativ kann der Energiebedarf für die Erhitzung des Kondensats durch Wärmeintegration verringert werden, indem mit einem zusätzlichen Wärmetauscher das zu entgasende Kondensat mit dem entgasten Kondensat vorgewärmt wird.

Zu den oben ausgeführten Rechenbeispielen in Beispielen 1 und 2 bleibt anzumerken, dass sie lediglich das Ziel haben, die Erfindung zu verdeutlichen und eine grobe Abschätzung der Massenströme und des Energiebedarfs zu liefern. Sie dürfen nicht als präzise Auslegungswerte missverstanden werden. Die tatsächlichen Werte können von den oben angegebenen zwar abweichen, werden jedoch in derselben Größenordnung liegen.

Analog zu den oben durchgeführten Betrachtungen in Beispielen 1 und 2 lässt sich die Erfindung auf weitere Elektrolyseurtypen anwenden, beispielsweise die CO₂-Elektrolyseure oder die Chlor-Alkali-Elektrolyseure, wobei hier entsprechend auch der Energiebedarf gering ist und durch die Vorteile des Entgasens mehr als aufgewogen wird.

Die erfindungsgemäße Verwendung von Dampf als Strippmedium scheint zunächst kontra-indikativ, da die Verdampfung von Wasser als energieintensiv gilt. Da es sich bei Abwässern aus Elektrolyseuren in der Regel jedoch um relativ kleine Massenströme handelt, und die Löslichkeit der relevanten Gase ebenfalls gering ist, müssen auch nur relativ geringe Dampf-Ströme erzeugt werden. Bei Beispiel 2 gemäß Figur 11, bei dem das Kondensat aus zwei Kompressionsstufen einer WasserElektrolyse im 10 MW-Maßstab entgast wird, wurde ein elektrischer Bedarf von knapp 3 kW für die Dampferzeugung und Vorheizung des Kondensats abgeschätzt. Es sind also weniger als ein Promille der Elektrolyseleistung nötig, was in vielen Fällen als vernachlässigbar gelten darf. Dieser Bedarf lässt sich weiter durch ein Vorheizen des zu entgasenden Kondensats mit entgastem Kondensat mit einem Wärmetauscher erniedrigen und durch eine geschickte Prozessführung sogar ganz vermeiden. Man könnte beispielsweise nach einer Kompressionsstufe bei möglichst hoher Temperatur kondensieren, so dass bei einer Druckentspannung automatisch der entsprechende Siedepunkt bereits überschritten wäre und so instantan Dampfblasen entstünden.

Ein erfindungsgemäßer Vorteil ist, dass bei der Verwendung von Dampf keine weitere Substanz in das System eingebracht wird, also keine Verunreinigungen in das System gelangen können. Somit ist es grundsätzlich weiterhin möglich, das bei der Entgasung des Abwassers anfallende Gas direkt in die Atmosphäre zu leiten, wie in Beispiel 1. Es ist aber auch möglich das Gas in den Prozess zurückzuführen, wie in Beispiel 2, oder sogar auch das entgaste Wasser bzw. generell eine entgaste Flüssigkeit wieder zu nutzen, da dieses keine Verunreinigung erfahren hat ("zero waste policy").

Ein großer Vorteil der Erfindung liegt in einem einfach umzusetzenden robusten Konzept, das einen sicheren Betrieb ohne besondere sicherheitstechnische Auslegungen oder Bauteile ermöglicht. Eine sicherheitsgerichtete Überwachung des DampfStrippers ist relativ einfach, beispielsweise durch eine Temperaturüberwachung, möglich. Es ist kein zusätzliches rotierendes Equipment nötig, selbst wenn das gewonnene Gas in den Prozess zurückgeführt werden soll, da ein Dampfstripper bei erhöhtem Druck betrieben werden kann.

## Patentansprüche

1. Verfahren zum Entgasen mindestens eines ersten und/oder zweiten Flüssigkeitsstroms enthaltend ein erstes Gas, der aus einem Elektrolyseur abgeleitet wird und/oder der durch Behandlung mindestens eines aus einem Elektrolyseur abgeleiteten ersten Gasstroms umfassend ein erstes Fluid und das erste Gas gebildet wird, umfassend:
- Bereitstellen eines Elektrolyseurs (101),
- Umsetzen mindestens eines Edukts in dem Elektrolyseur zu mindestens einem gasförmigen Produkt umfassend das erste Gas (102),
- Bilden des mindestens einen ersten Flüssigkeitsstroms enthaltend das erste Gas durch Einbringen des ersten Gases in eine erste Flüssigkeit im Elektrolyseur (103), und/oder Bilden des mindestens einen ersten Gasstroms umfassend das erste Fluid und das erste Gas durch Einbringen des ersten Fluids im Elektrolyseur in das gasförmige Produkt umfassend das erste Gas (113), wobei das erste Fluid von der ersten Flüssigkeit gleich oder verschieden sein kann,
- Ableiten des mindestens einen ersten Flüssigkeitsstroms enthaltend das erste Gas aus dem Elektrolyseur (104), und/oder Ableiten des mindestens einen ersten Gasstroms umfassend das erste Fluid und das erste Gas aus dem Elektrolyseur (114a), und Behandeln des mindestens einen ersten Gasstroms umfassend das erste Fluid und das erste Gas (114b), wodurch der mindestens eine zweite Flüssigkeitsstrom enthaltend das erste Gas entsteht, und
- Entgasen des mindestens einen ersten und/oder zweiten Flüssigkeitsstroms enthaltend das erste Gas (105; 105a; 115), wobei das Entgasen derart erfolgt, dass der mindestens eine erste und/oder zweite Flüssigkeitsstrom enthaltend das erste Gas mittels Dampfstrippen in einem Dampfstripper entgast wird, wobei das erste Gas zumindest teilweise aus dem mindestens einen ersten und/oder zweiten Flüssigkeitsstrom abgetrennt wird.

2. Verfahren gemäß Patentanspruch 1, wobei der mindestens eine erste und/oder zweite Flüssigkeitsstrom enthaltend das erste Gas Wasser enthält.

3. Verfahren gemäß Patentanspruch 1 oder 2, wobei der Dampf-stripper eine Schüttung und/oder Glockenböden aufweist, oder wobei der Dampfstripper als Blasensäule ausgebildet ist.

4. Verfahren gemäß einem der vorstehenden Patentansprüche, wobei der mindestens eine erste und/oder zweite Flüssigkeitsstrom enthaltend das erste Gas vor dem Dampfstrippen vorgewärmt wird.

5. Verfahren gemäß Patentanspruch 4, wobei das Vorwärmen unter Verwendung des nach dem Dampfstrippen entgasten ersten und/oder zweiten Flüssigkeitsstromes erfolgt.

6. Verfahren gemäß einem der vorstehenden Patentansprüche, wobei vor dem Dampfstrippen eine Druckerniedrigung erfolgt.

7. Verfahren gemäß einem der vorstehenden Patentansprüche, wobei das im Dampfstripper abgetrennte erste Gas in den abgeleiteten ersten Gasstrom umfassend das erste Fluid und das erste Gas und/oder den Elektrolyseur zurückgeführt wird.

8. Verfahren gemäß Patentanspruch 7, wobei der Druck im Dampfstripper derart eingestellt wird, dass er mindestens dem Druck an einer Stelle entspricht, zu der das abgetrennte erste Gas zurückgeführt wird.

9. Vorrichtung (10; 20) zum Entgasen mindestens eines ersten und/oder zweiten Flüssigkeitsstroms enthaltend ein erstes Gas, der aus einem Elektrolyseur (1) abgeleitet wird und/oder der durch Behandlung mindestens eines aus einem Elektrolyseur (1) abgeleiteten ersten Gasstroms umfassend ein erstes Fluid und das erste Gas gebildet wird, umfassend:
- einen Elektrolyseur (1), der dazu ausgebildet ist, mindestens ein Edukt in dem Elektrolyseur (1) zu mindestens einem gasförmigen Produkt umfassend das erste Gas umzusetzen, wobei der Elektrolyseur (1) zudem derart ausgestaltet ist, dass durch Einbringen des ersten Gases in eine erste Flüssigkeit im Elektrolyseur (1) einen ersten Flüssigkeitsstrom enthaltend das erste Gas gebildet werden kann, und/oder dass durch Einbringen des ersten Fluids im Elektrolyseur (1) in das gasförmige Produkt umfassend das erste Gas ein erster Gasstrom umfassend das erste Fluid und das erste Gas gebildet werden kann;
- eine erste Ableitung (2) zum Ableiten des mindestens einen ersten Flüssigkeitsstroms enthaltend das erste Gas aus dem Elektrolyseur (1), die dazu ausgebildet ist, den mindestens einen ersten Flüssigkeitsstrom enthaltend das erste Gas aus dem Elektrolyseur (1) abzuleiten; und/oder
- eine erste Gasableitung (21) zum Ableiten des mindestens einen ersten Gasstroms umfassend das erste Fluid und das erste Gas aus dem Elektrolyseur (1), die dazu ausgebildet ist, den mindestens einen ersten Gasstrom umfassend das erste Fluid und das erste Gas aus dem Elektrolyseur (1) abzuleiten,
- eine Behandlungseinrichtung (24a; 24b) zum Behandeln des mindestens einen ersten Gasstromes umfassend das erste Fluid und das erste Gas, die dazu ausgebildet ist, den mindestens einen ersten Gasstrom umfassend das erste Fluid und das erste Gas derart zu behandeln, dass mindestens ein zweiter Gasstrom enthaltend das erste Gas und der mindestens eine zweite Flüssigkeitsstrom enthaltend das erste Gas entstehen, wobei die erste Gasableitung (21) zudem dazu ausgebildet ist, den mindestens einen ersten Gasstrom umfassend das erste Fluid und das erste Gas der Behandlungseinrichtung (24a; 24b) zuzuführen, und
- eine zweite Ableitung (26) zum Ableiten des mindestens einen zweiten Flüssigkeitsstroms enthaltend das erste Gas, welche dazu ausgebildet ist, den mindestens einen zweiten Flüssigkeitsstrom enthaltend das erste Gas aus der Behandlungseinrichtung (24a; 24b) abzuleiten;
weiter umfassend
- mindestens einen Dampfstripper (3; 11), der dazu ausgebildet ist, das erste Gas mittels Dampfstrippen aus dem mindestens einen ersten und/oder zweiten Flüssigkeitsstrom enthaltend das erste Gas zumindest teilweise abzutrennen, wobei dem Dampfstripper (3; 11) der erste Flüssigkeitsstrom enthaltend das erste Gas über die erste Ableitung (2) und/oder der zweite Flüssigkeitsstrom enthaltend das erste Gas über die zweite Ableitung (26) zugeführt werden.

10. Vorrichtung (10; 20) gemäß Patentanspruch 9, wobei der mindestens eine Dampfstripper (3; 11) eine Schüttung und/oder Glockenböden aufweist, oder wobei der Dampfstripper (3; 11) als Blasensäule (11) ausgebildet ist.

11. Vorrichtung (10; 20) gemäß Patentanspruch 9 oder 10, weiter umfassend einen ersten und/oder zweiten Wärmetauscher zum Vorwärmen des mindestens einen ersten und/oder zweiten Flüssigkeitsstroms enthaltend das erste Gas, der jeweils dazu ausgebildet ist, den mindestens einen ersten und/oder zweiten Flüssigkeitsstrom enthaltend das erste Gas vor dem Dampf-strippen in der ersten und/oder zweiten Ableitung (2; 26) vorzuwärmen.

12. Vorrichtung (10; 20) gemäß Patentanspruch 11, weiter umfassend eine dritte und/oder vierte Ableitung zum Ableiten des entgasten ersten und/oder zweiten Flüssigkeitsstroms, die mit dem mindestens einen Dampfstripper (3; 11) verbunden und dazu ausgebildet ist, einen ersten und/oder zweiten entgasten Flüssigkeitsstrom aus dem mindestens einen Dampfstripper (3; 11) abzuleiten, wobei die dritte und/oder vierte Ableitung derart mit dem ersten und/oder zweiten Wärmetauscher verbunden ist, dass dem ersten und/oder zweiten Wärmetauscher über die dritte und/oder vierte Ableitung der nach dem Dampfstrippen entgaste erste und/oder zweite Flüssigkeitsstrom derart zugeführt werden kann, dass damit zumindest teilweise das Vorwärmen des mindestens einen ersten und/oder zweiten Flüssigkeitsstroms enthaltend das erste Gas erfolgen kann.

13. Vorrichtung (10; 20) gemäß einem der Patentansprüche 9 bis 12, weiter umfassend mindestens eine Einrichtung zur Druckerniedrigung (25a; 25b), die in der ersten und/oder zweiten Ableitung (2; 26) vorgesehen und dazu ausgebildet ist, den mindestens einen ersten und/oder zweiten Flüssigkeitsstrom enthaltend das erste Gas einer Druckerniedrigung zu unterziehen.

14. Vorrichtung (10; 20) gemäß einem der Patentansprüche 9 bis 13, weiter umfassend eine Rückführungsleitung (30), die den Dampfstripper (3; 11) mit der ersten Gasableitung (21) und/oder dem Elektrolyseur (1) verbindet und dazu ausgebildet ist, das im Dampfstripper (3; 11) abgetrennte erste Gas in den abgeleiteten ersten Gasstrom umfassend das erste Fluid und das erste Gas und/oder den Elektrolyseur (1) zurückzuführen.

15. Vorrichtung (10; 20) gemäß Patentanspruch 14, wobei der Dampfstripper (3; 11) derart ausgestaltet ist, dass er das Gas mit mindestens einem Druck in die Rückführungsleitung (30) abgibt, der dem Druck an einer Stelle entspricht, zu der das abgetrennte erste Gas zurückgeführt wird.
